(19) Europäisches Patentamt
European Patent Office
Office européen des brevets

(11) **EP 3 772 166 A1**

(12) **EUROPÄISCHE PATENTANMELDUNG**

(43) Veröffentlichungstag:
**03.02.2021  Patentblatt 2021/05**

(51) Int Cl.:
***H02M 1/40*** (2007.01)    ***H02M 1/00*** (2006.01)

(21) Anmeldenummer: **19189390.8**

(22) Anmeldetag: **31.07.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Erhartt, Lutz**
**1100 Wien (AT)**

(72) Erfinder: **Erhartt, Lutz**
**1100 Wien (AT)**

(74) Vertreter: **Patentanwaltskanzlei**
**Matschnig & Forsthuber OG**
**Biberstraße 22**
**Postfach 36**
**1010 Wien (AT)**

(54) **PULSWEITENMODULATIONSVERFAHREN FÜR SPANNUNGSWECHSELRICHTERGESPEISTE TRANSFORMATOREN**

(57)    Die Erfindung betrifft ein Verfahren zur Generierung abwechselnd positiver und negativer Spannungsimpulse einer Transformatorprimärspannung $u_P(t)$ aus einem von einer Steuerspannung $u_s(t)$ abgeleiteten Impulszug $z(t)$, wobei Impulse $z_i$ des Impulszuges $z(t)$ zu abwechselnd positiven und negativen Spannungsimpulsen $u_{P,i}$ der Transformatorprimärspannung $u_P(t)$ verstärkt werden, mit einem Takt mit der Taktperiode pi, und wobei in jeder Taktperiode Pi ein Impuls zi erzeugt wird, und wobei die Impulse $z_i$ des Impulszuges $z(t)$ jeweils eine Dauer $\tau_i$ aufweisen und wobei die Dauer $\tau_i$ des jeweiligen Impulses $z_i$ einem Steuerwert $u_{s,i}$ entspricht oder dem Mittelwert eines alten und neuen Steuerwerts $(u_{s,i-1}+u_{s,i})/2$. Es ist vorgesehen, dass aus der Steuerspannung $u_s(t)$ die Steuerwerte $u_{s,i}$ abgetastet werden und die Steuerwerte $u_{s,i}$ rechnerisch zu den Werten $u_{s,i}^*$ abgewandelt werden, oder die Steuerspannung $u_s(t)$ zu der modifizierten Steuerspannung $u_s^*(t)$ verändert wird, und die Steuerspannungswerte $u_{s,i}^*$ aus der modifizierten Steuerspannung $u_s^*(t)$ abgetastet werden, und aus den aus der modifizierten Steuerspannung $u_s^*(t)$ abgetasteten oder den modifizierten Werten $u_{s,i}^*$ der pulsweitenmodulierte Impulszug $z^*(t)$ erstellt wird, wobei mit $u_{s,i}^*$ der Impuls $z_i^*$ des pulsweitenmodulierte Impulszug $z^*(t)$ erstellt wird, und in jeder Taktperiode pi der Magnetisierungsstrom $i_m^*(t)$, insbesondere die durch den pulsweitenmodulierten Impuls $z_i^*$ erzeugte Amplitude $m_i^*$ des Magnetisierungsstroms $i_m^*(t)$ berechnet wird, und das Integral $S^*(t)$, insbesondere der Wert $S_{i-1}^*$ zum Zeitpunkt des innerhalb von Impuls $z_i^*$ auftretenden Nulldurchgangs des Magnetisierungsstroms $i_m^*(t)$ berechnet wird, wobei das von der modifizierten Steuerspannung $u_s^*(t)$ oder dem modifizierten Wert $u_{s,i}^*$ erzeugte zeitliche Integral $S^*(t)$, insbesondere der Wert $S_i^*$ einen Wert $F_{max}$ nicht übersteigt, wobei gilt

$$F_{max} = u_{S,max} \cdot \left(1 - \frac{u_{S,max}}{2}\right).$$

D1

D3

D4

D5

FIG.3

**Beschreibung**

Die Erfindung betrifft ein Verfahren zur Generierung abwechselnd positiver und negativer Spannungsimpulse einer Transformatorprimärspannung $u_P(t)$ aus einem von einer Steuerspannung $u_S(t)$ und einer periodischen Hilfsspannung $u_h(t)$ mit einer Taktperiode Ti abgeleiteten Impulszug $z(t)$, wobei Impulse $z_i$ des Impulszuges $z(t)$ zu abwechselnd positiven und negativen Spannungsimpulsen $u_{P,i}$ der Transformatorprimärspannung $u_P(t)$ verstärkt werden, und wobei in jeder Taktperiode Ti ein Impuls $z_i$ erzeugt wird, und wobei die Impulse $z_i$ des Impulszuges $z(t)$ jeweils eine Dauer $\tau_i$ aufweisen und wobei die Dauer $\tau_i$ des jeweiligen Impulses $z_i$ einem Steuerwert $u_{S,i}$ entspricht oder dem Mittelwert eines alten und neuen Steuerwerts $(u_{S,i-1}+u_{S,i})/2$.

Weiters betrifft die Erfindung einen Modulator zum Durchführen eines solchen Verfahrens sowie einen Schaltregler zum Durchführen eines solchen Verfahrens, wobei der Schaltregler vorzugsweise einen phasenverschiebungsgesteuerten Vollbrückenwechselrichter (PSVB) und einen erfindungsgemäßen Modulator umfasst.

Die Ansteuersignale für einen PSVB werden aus dem Impulszug $z(t)$ gewonnen, indem ein Digitalsignal A erzeugt wird, das bei den steigenden Flanken, wenn sich der Zustand von $z(t)$ von 0 auf 1 ändert, seinen Zustand ändert, und ein phasenverschobenes Digitalsignal B erzeugt wird, das bei den fallenden Flanken, wenn sich der Zustand von $z(t)$ von 1 auf 0 ändert, seinen Zustand ändert.

Mit den Signalen A und B wird das Potential an den Brückenmittelpunkten $M_A$ und $M_B$ des PSVB gesteuert, wobei die Primärseite des Transformators an die Brückenmittelpunkte $M_A$ und $M_B$ angeschlossen ist.

Die Differenz der digitalen Signalzüge A-B ergibt den durch $z(t)$ erzeugten Verlauf der in den Figuren dargestellten Primärwechselspannung $u_P(t)$.

Stand der Technik

Aus dem Stand der Technik ist eine Vielzahl unterschiedlicher Transformatoren bzw. Verfahren zur Steuerung derartiger Transformatoren bekannt, die mittels Wechselrichtern betrieben werden. Die Verwendung von Wechselrichtern bietet den großen Vorteil, dass gegenüber anderen Anordnungen, wie beispielsweise Vorwärtswandlern oder Sperrwandlern, kleinere Filter benötigt werden und ein höherer Leistungsbereich aufgrund der verbesserten Transformatornutzung möglich ist.

Die Verwendung von Wechselrichtern führt jedoch dazu, dass aufgrund der möglicherweise eintretenden Sättigung des Transformators die Gefahr besteht, dass aufgrund von Sättigungskurzschlüssen des Transformators einzelne Bauteile zerstört werden.

Aus dem Stand der Technik ist daher bei größeren zu schaltenden Leistungen vorgesehen, mit einem ersten Schaltregler Strom in einem Stromzwischenkreis einzustellen und diesen Strom dem überlappend angesteuerten Wechselrichter zuzuführen. Auch hier ist eine Symmetrierung des Magnetisierungsstroms erforderlich. Die Sättigung des Transformators entspricht wirkungsgleich einer vorzeitigen Überlappung bzw. vorzeitigen Kurzschluss der Wechselrichtereingangsspannung. Mit den folgenden Impulsen wird der vorzeitigen Überlappung entgegen gewirkt. Der zweistufige Aufbau und die Zwischenkreisdrossel führen zur Verringerung des Wirkungsgrads und zu langsameren Regelungen. (Sollte aufgrund eines Steuerfehlers keine Überlappung stattfinden, so wird z.B. eine Freilaufdiode leitend und die Energie im Stromzwischenkreis gespeichert.)

Um den Stromzwischenkreis einzusparen und den spannungsgespeisten Wechselrichter sicher zu machen, sollte ein Kurzschluss eines Brückenzweiges aufgrund eines Schalterversagens oder Steuerfehlers mit einer Notabschaltung abgeschaltet und der Wechselrichter stillgesetzt werden können. Das wird seit 1990 mit FET und IGBT Leistungsschaltern und neuerdings mit WBG Leistungsschaltern bereits bis zu hohen Leistungen beherrscht. Um eine Regelung einer Ausgangsgröße zu ermöglichen, ist es darüber hinaus notwendig, einen sich anbahnenden Sättigungskurzschluss rechtzeitig zu erkennen und abzuschalten, bevor eine Notabschaltung erfolgt. Dabei entstehen auch zusätzliche Verluste. Aus dem Stand der Technik sind z.B. Steuerungen wie in US4150424, GB2071432, US4553198, EP0237861, EP0146876, US5550498, oder DE19624274 beschrieben bekannt. Diese Lösungen schließen unter der Voraussetzung eines quasistationären Betriebs aus dem Primärstrom auf den nicht direkt messbaren Magnetisierungsstrom. Die Regelung kann nur verhältnismäßig langsam über mehrere 100 Schaltperioden erfolgen.

Mit modernen Leistungsschaltern (FET, IGBT) und der modernen digitalen Controllertechnik ist es möglich, derart genaue Spannungsimpulse herzustellen, dass im stationären Betrieb keine Sättigungserscheinungen auftreten. Das wird in dem in der DE19634713A beschriebenen Verfahren ausgenützt. Dabei wird in jeder Schaltperiode ein neuer Sollwert verarbeitet. Mit dem ersten Impuls (Mittelwert) wird die Magnetisierung auf einen Wert gebracht, der dem neuen Sollwert entspricht. Der zweite Impuls entspricht bereits dem geforderten Sollwert. Nachteilig wird eine Reaktions(Verzögerungs-)zeit eingeführt. Gerade bei dynamischen Regelvorgängen, z.B. KS-Schutz, verursacht die verzögerte Reaktion Schwingungen im Regelkreis.

In der EP898360B sind Pulsweitenmodulationsverfahren beschrieben, die in jedem Impuls einen neuen Sollwert verarbeiten. Nachteilig dabei wird bei dynamischen Vorgängen dennoch ein Gleichanteil in der Magnetisierung erzeugt, weshalb der Eisenkern 20% mehr Querschnitt aufweisen sollte. Es wird weiter die Möglichkeit beschrieben, die Schaltfrequenz zu verändern, wodurch die Reaktionszeit weiter reduziert werden kann. Nachteilig dabei sind kurzzeitig doppelte Schaltverluste, wenn die Schaltfrequenz verdoppelt wird (Halbierung der Reaktionszeit). Die in der AT511298B beschriebene Lösung weist keine Reaktionszeit mehr auf, das ist für die Auslegung der Ausgangsdrossel und für die KS-Sicherheit vorteilhaft, benötigt aber doppelt so viel (100% mehr) Eisenquerschnitt im Trafo.

In der US6469491 werden die Sättigungseffekte im Leistungstransformator negiert, weil nur die Zeiten der Energieübertragung über den Transformator gemittelt werden. Um diese Zeiten genau festzustellen, wird erneut der Primärstrom erfasst.

Mittlerweile wurden die wesentlich schnelleren WBG Leistungsschalter entwickelt, mit denen eine 10 bis 100 fache Schaltfrequenz erreicht werden kann. Das Problem dabei ist, dass die positiven und negativen Spannungsimpulse aufgrund des sogenannten Jitters - einer kleinen Unsicherheit, wann genau ein WBG Transistor nach dem Abschaltbefehl an seinem Steuereingang abschaltet - im stationären Betrieb unterschiedliche Dauern aufweisen können, die den Magnetisierungsstrom wandern lassen.

Um bei dem Entwurf für einen Lastregler die Sättigung des Trafos nicht berücksichtigen zu müssen, wäre es ideal, den Magnetisierungsstrom schon im linearen Bereich unverzögert zu erfassen. Allerdings sind dafür notwendige Stromzangen teuer (aktuelle Kosten ca. 2.000 Euro) und es gibt keine Leitung, in der ausschließlich der Magnetisierungsstrom fließt. Den Magnetisierungsstrom zu erfassen, indem auch der Sekundärstrom gemessen und vom Primärstrom abgezogen wird, ist problematisch. Der Magnetisierungsstrom ist klein gegenüber dem Laststrom und diese kleine Differenz muss sehr genau und möglichst unverzögert erfasst werden.

Denkbar wäre es, mittels Primärstrommessung Kenntnis über den Magnetisierungsstrom zu erhalten, wann der Transformator zu sättigen beginnt und beispielweise die positiven Impulse um 1 Bit verlängern/verkürzen, bis die Sättigungserscheinung verschwindet (und später eventuell bei gegenteiliger Polarität auftaucht), aber diese Lösungen setzen einen quasistationären Betrieb voraus, was bedeutet, dass sich die Steuerspannung derzeit nicht schneller als in 200 Schaltperioden von 0 auf 1 ändern darf. Andernfalls könnte, da der Magnetisierungsstrom (bei jeder Pulsbreite möglich) schon nahe zu einer Sättigungsgrenze gewandert ist, die weitere Vergrößerung der Pulsbreite zur Notabschaltung des Leistungsschalters führen.

Die in DE19634713A1, EP898360B1 und AT511298B1 beschriebenen Steuerungen, deren Vorteil es war, diese Begrenzung ohne weitere Überdimensionierungen oder weitere Bauteile zu überwinden, funktionieren zwar nicht mehr mit WBG Transistoren, der wirtschaftliche Erfolg hat jedoch bewiesen, dass die Effizienz der Energieübertragung wesentlich davon abhängt, dass der Magnetisierungsstrom im Mittel den Wert Null aufweist. Durch wesentlich schneller mögliche Regelvorgänge kann jedoch ein Gleichanteil im Magnetisierungsstrom erzeugt werden. Dieser Gleichanteil baut sich aufgrund von Verlusten ab, als Folge der Magnetisierungsstrom wandert bzw. relaxiert, und dieses Relaxieren kann sich zum Wandern des Magnetisierungsstroms zufolge des Schaltjitters hinzuaddieren.

Es ist eine Aufgabe der vorliegenden Erfindung, einen Lösungsweg anzugeben, wonach der Transformator ohne Strommessung im linearen Bereich seines Magnetisierungsstroms betrieben werden kann und ein Pulsweitenmodulator realisiert wird, dessen pulsweitenmoduliertes Ausgangssignal sich innerhalb weniger Taktperioden an die Steuerspannung anpasst (kleinstmöglicher Ausgangsfilter), ohne dabei einen Gleichanteil im Magnetisierungsstrom zu verursachen.

Die Erfindung löst diese Aufgabe bei einem Verfahren der eingangs genannten Art dadurch, dass erfindungsgemäß aus der Steuerspannung $u_s(t)$ die Steuerwerte $u_{s,i}$ abgetastet werden und die Steuerwerte $u_{s,i}$ rechnerisch zu den Werten $u_{s,i}*$ abgewandelt werden, oder die Steuerspannung $u_s(t)$ zu der modifizierten Steuerspannung $u_s*(t)$ verändert wird, und die Steuerspannungswerte $u_{s,i}*$ aus der modifizierten Steuerspannung $u_s*(t)$ abgetastet werden, und aus den aus der modifizierten Steuerspannung $u_s*(t)$ abgetasteten oder den modifizierten Werten $u_{s,i}*$ der pulsweitenmodulierte Impulszug $z*(t)$ erstellt wird, wobei mit $u_{s,i}*$ der Impuls $z_i*$ des pulsweitenmodulierte Impulszug $z*(t)$ erstellt wird, und in jeder Taktperiode $T_i$ der Magnetisierungsstrom $i_m*(t)$, insbesondere die durch den pulsweitenmodulierten Impuls $z_i*$ erzeugte Amplitude $m_i*$ des Magnetisierungsstroms $i_m*(t)$ berechnet wird, und das Integral $S*(t)$, insbesondere der Wert $S_{i-1}*$ zum Zeitpunkt des innerhalb von Impuls $z_i*$ auftretenden Nulldurchgangs des Magnetisierungsstroms $i_m*(t)$ berechnet wird, wobei das von der modifizierten Steuerspannung $u_s*(t)$ oder dem modifizierten Wert $u_{s,i}*$ erzeugte zeitliche Integral $S*(t)$, insbesondere der Wert $S_i*$ einen Wert $F_{max}$ nicht übersteigt, wobei gilt

$$F_{max} = u_{S,max} \cdot \left(1 - \frac{u_{S,max}}{2}\right).$$

Vorzugsweise kann vorgesehen sein, dass der Steuerwert $u_{s,i}$ aus der Steuerspannung $u_s(t)$ abgetastet zu Beginn der Taktperiode Ti vorliegt, und die Dauer $\tau_i*$ von $z_i*$ dem modifizierten Steuerwert $u_{s,i}*$ entspricht, $\tau_i* = u_{s,i}*$, und der Integralabsolutwert $|S_i*| = AS_i$ in Taktperiode $T_{i+1}$ vorgegeben wird mit

$$AS_i^* = \frac{u_{S,i}}{2} \cdot \left(1 - \frac{u_{S,i}}{2}\right),$$

und $u_{s,i}^*$ berechnet wird, nach:

$$u_{s,i}^* = (m_{i-1}^* + m_i^*)/2, \text{ mit } m_i^* = F_i^*/(1 - m_{i-1}^*/2), \text{ wobei } F_i^* := AS_{i-1}^* + AS_i^*.$$

Bei einer Alternative kann vorgesehen sein, dass der Steuerwert $u_{s,i}$ aus der Steuerspannung $u_s(t)$ abgetastet in der Mitte der Taktperiode $T_i$ vorliegt, und die Dauer $\tau_i^*$ von $z_i^*$ dem arithmetischen Mittelwert von altem und neuem modifizierten Steuerwert entspricht,

$$T_i^* = (u_{s,i-1}^* + u_{s,i}^*)/2,$$

und
der Integralabsolutwert $|S_i^*| = AS_i$ in Taktperiode $T_{i+1}$ vorgegeben wird mit

$$AS_i^* = \frac{u_{S,i}}{2} \cdot \left(1 - \frac{u_{S,i}}{2}\right),$$

und

$u_{s,i}^*$ berechnet wird, nach $u_{S,i}^* = 1 - \sqrt{1 - 2 \cdot F_i^*}$ , wobei $F_i^* := AS_{i-1}^* + AS_i^*$.

Es kann vorgesehen sein, dass der Steuerwert $u_{s,i}$ aus der Steuerspannung $u_s(t)$ abgetastet zu Beginn oder während der Taktperiode $T_i$ vorliegt, und aus der periodischen Hilfsspannung ein Polaritätszustand $p_i$ abgeleitet wird, , und die Dauer $\tau_i^*$ von $z_i^*$ dem arithmetischen Mittelwert von altem und neuem modifizierten Steuerwert,

$$T_i^* = (u_{s,i-1}^* + u_{s,i}^*)/2$$

entspricht, und der von dem pulsweitenmodulierten Impuls $z_i^*$ erzeugte Integralbeitrag $F_i^*$ bis zum jeweils nächsten Nulldurchgang von $i_m^*(t)$ in $p_{i+1}$,

$$F_i^* = u_{s,i}^*(1 - u_{s,i}^*/2) \text{ oder } F_i^* = u_{s,i}^*(1 - u_{s,i-1}^*/2)$$

mit der Pulspolarität $p_i$ gewichtet zum Integralwert

$$S_i^* = S_{i-1}^* + p_i F_i^*$$

und/oder

$$V_i^* = V_{i-1}^* + p_i F_i^*/2$$

addiert wird,
und

- entweder, bei Impulsen der Polarität $p_i = \text{sign}(V_{i-1}^*)$, wenn der Wert $u_{s,i}$ größer oder gleich ist, als der alte modifizierte Steuerwert $u_{s,i-1}^*$, oder bei Impulsen der Polarität $p_i = -\text{sign}(V_{i-1}^*)$, wenn der Wert $u_{s,i}$ kleiner oder gleich ist, als der alte modifizierte Steuerwert $u_{s,i-1}^*$, anstelle des neuen Steuerwerts $u_{s,i}$ der alte Steuerwert $u_{s,i-1}^*$ genommen wird,
- oder im Falle von $\text{sign}(S_{i-1}^*) = p_i$, der modifizierte Steuerspannungswert $u_{s,i}^*$ zu $u_{s,i}^* = 0$ genommen wird und lediglich bei Impulsen der Polarität $p_i = \text{sign}(V_{i-1}^*)$ und wenn der Wert $u_{s,i}$ größer oder gleich ist, als der alte modifizierte Steuerwert $u_{s,i-1}^*$, anstelle des neuen Steuerwerts $u_{s,i}$ der alte Steuerwert $u_{s,i-1}^*$ genommen wird.

Es kann vorgesehen sein, dass bei Impulsen der Polarität $p_i = \text{sign}(V_{i-1}^*)$ die Steuerspannung $u_s(t)$ in einem Zeitfenster $AF_i$ derart abgewandelt wird, dass $u_s^*(t)=u_{s,i-1}^*$, sobald $u_s(t) \geq u_{s,i-1}^*$ ist, bzw. eine Zunahme der abgewandelten Steuerspannung $u_s^*(t)$ unterbunden wird, und, bei Impulsen der Polarität $p_i = -\text{sign}(V_{i-1}^*)$, die Steuerspannung $u_s(t)$ im Zeitfenster $AF_i$ derart abgewandelt wird, dass $u_s^*(t)=u_{s,i-1}$, sobald $u_s(t) \leq u_{s,i-1}^*$ ist, bzw. eine Abnahme der abgewandelten Steuerspannung $u_s^*(t)$ unterbunden wird;

Vorzugsweise kann vorgesehen sein, dass im Falle von $\text{sign}(S_{i-1}^*)=p_i$ die Steuerspannung $u_s(t)$ im Zeitfenster $AF_i$ zu $u_s^*(t)=0$ abgewandelt wird und bei Impulsen der Polarität $p_i = \text{sign}(V_{i-1})$, die Steuerspannung $u_s(t)$ im Zeitfenster $AF_i$ derart abgewandelt wird, dass $u_s^*(t)=u_{s,i-1}^*$, sobald $u_s(t) \geq u_{s,i-1}^*$ ist, bzw. $u_s^*(t)$ mit dem vorhergehend festgestellten Steuerwert $u_{s,i-1}^*$ begrenzt wird.

Figurenbeschreibung

Im Folgenden ist die Erfindung an Hand von mehreren nicht einschränkenden Ausführungsbeispielen näher erläutert. In dieser zeigt

Fig. 1 eine beispielhafte Ausführungsform eines Schaltreglers mit Modulator,

Fig. 2 schematisch die Funktionsweise eines erfindungsgemäßen Modulators nach einer ersten Ausführungsform der Erfindung,

Fig. 3 die Zeitverläufe eines Schaltreglers mit einem Modulator mit sägezahnförmiger Hilfsspannung gemäß einer ersten Ausführungsform der Erfindung,

Fig. 3a die Zeitverläufe für den Modulator mit sägezahnförmiger Hilfsspannung gemäß einer Variante der zweiten Ausführungsform der Erfindung,

Fig. 3b die Zeitverläufe für den Modulator mit sägezahnförmiger Hilfsspannung gemäß einer zweiten Variante der zweiten Ausführungsform der Erfindung,

Fig. 4 die Zeitverläufe eines Schaltreglers mit einem Modulator mit dreieckförmiger Hilfsspannung gemäß der ersten Ausführungsform der Erfindung,

Fig. 5 schematisch die Funktionsweise eines erfindungsgemäßen Modulators nach der zweiten Ausführungsform der Erfindung,

Fig. 6 die Zeitverläufe für den Modulator mit dreieckförmiger Hilfsspannung gemäß einer Variante der zweiten Ausführungsform der Erfindung, und

Fig. 7 die Zeitverläufe für den Modulator mit dreieckförmiger Hilfsspannung gemäß der zweiten Variante der zweiten Ausführungsform.

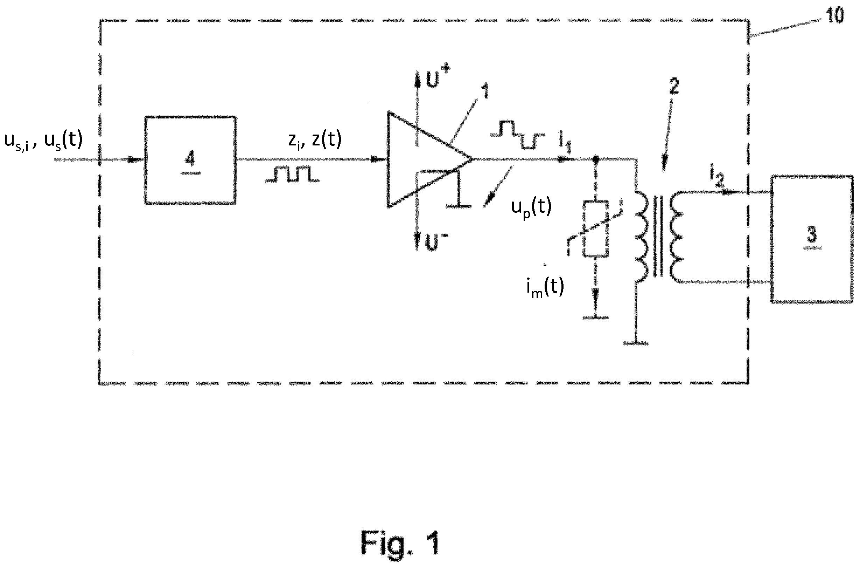

In **Fig. 1** ist eine typische Ausführungsform eines Schaltreglers 10 zur Steuerung der über einen Transformator 2 zu übertragenden Leistung näher dargestellt. In diesem Ausführungsbeispiel wird eine schaltfrequente oder eine niederfrequente (z.B. 100Hz) oder unipolare Last 3 von dem Schaltregler 10 mit elektrischer Energie versorgt. Dabei wird zur Vorgabe der auf die Last 3 zu übertragenden elektrischen Energie ein Sollwertsignal $u_s(t)$ vorgegeben, das letztlich die über den Transformator 2 zu übertragende Leistung angibt. Im vorliegenden Ausführungsbeispiel ist dieses Sollwertsignal $u_s(t)$ als Spannungssignal realisiert, das innerhalb eines vorgegebenen Bereichs zwischen einem Minimalwert und einem Maximalwert $u_{max}$, der die Zeit der Energieübertragung festlegt, liegt. Dabei handelt es sich typischerweise um ein analoges Signal, es sind jedoch unterschiedliche Möglichkeiten der Vorgabe des Leistungswerts möglich, sodass das Signal $u_s(t)$ auch als Digitalsignal am Eingang des Schaltreglers 10 vorliegen kann.

Typischerweise wird das Sollwertsignal $u_s(t)$ einem Modulator 4 zugeführt, der an seinem Ausgang ein pulsweitenmoduliertes Signal $z(t)$ ausgibt, das zur Steuerung eines Wechselrichters 1 verwendet wird. Der Wechselrichter 1 ist dabei typischerweise in der Lage, einzelne, diskrete Spannungswerte zwischen einem vorgegebenen Spannungsmaximum $U^+$ und einem vorgegebenen Spannungsminimum $U^-$ an seinem Ausgang zur Verfügung zu stellen.

Das Modulationssignal $z$ wird für die Erstellung eines Spannungssignals $u_p(t)$ genutzt, das in weiterer Folge an den Transformator 2 angelegt wird. Der im Folgenden beschriebene Wechselrichter 1 hat dabei die Eigenschaft, dass er, wenn an ihm ein Modulationssignal z mit einem Signalpegel 0 anliegt, auch an seinem Ausgang einen Spannungsnullwert 0 anlegt. Wird an dem Wechselrichter 1 eine positive Taktflanke angelegt, so weist auch das Ausgangssignal des Wechselrichters 1 eine steigende oder fallende Flanke vom Nullwert hin zu einem Signalpegelwert $U^+$ oder $U^-$ auf. Der Wechselrichter 1 erzeugt dabei jeweils abwechselnd einen positiven bzw. negativen Spannungsimpuls an seinem Ausgang.

Am Ausgang des Wechselrichters 1 liegt ein in der Regel rechteckförmiges Spannungssignal $u_P(t)$ an, das an die Primärseite des Transformators 2 angelegt wird.

Als Konsequenz tritt am Transformator 2 ein Magnetisierungsstrom $i_m(t)$ auf. Dieser Magnetisierungsstrom $i_m(t)$ ist nicht unmittelbar durch Messung ermittelbar; insbesondere weist eine rein messtechnische Ermittlung des Magnetisierungsstroms $i_m(t)$ das Problem auf, dass die beiden Transformatorströme $i_1$, $i_2$ an beiden Seiten des Transformators gemessen werden müssten und der Magnetisierungsstrom durch Differenzbildung ermittelt werden müsste. Diese Ermittlung ist messtechnisch ungünstig, da die auftretenden Transformatorströme $i_1$, $i_2$ wesentlich größer sind als der Magnetisierungsstrom, wodurch auch größere Messungenauigkeiten entstehen. Der im Primärstrom $i_1$ enthaltene Magnetisierungsstrom $i_m(t)$ wird modellhaft als Strom durch die Hauptinduktivität des Transformators berechnet, die strichliert eingezeichnet an den Eingang des Transformators angeschlossen ist.

Die Sekundärseite des Transformators 2 bildet den Ausgang des Schaltreglers 10 und ist an die Last 3 angeschlossen.

**Erfindungsgemäßes Verfahren auf Basis der Stellung des Integralwerts des Magnetisierungsstroms entsprechend dem Steuerwert**

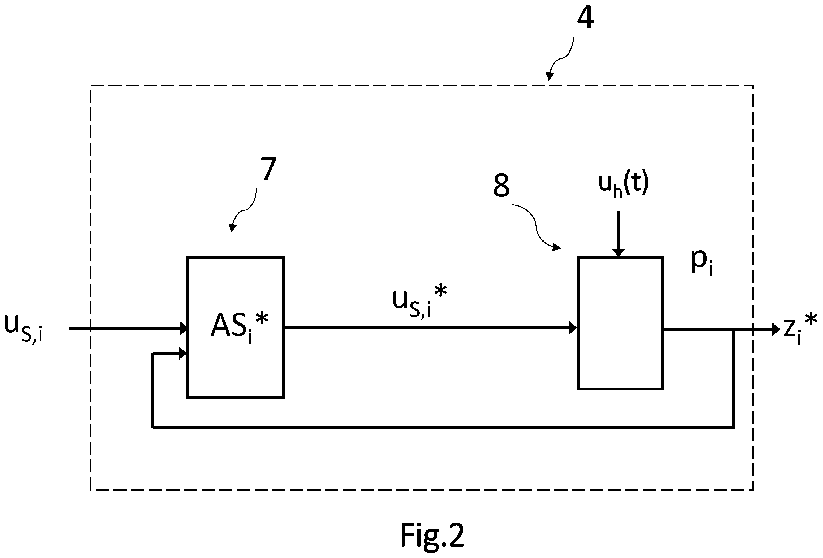

**Fig. 2** zeigt schematisch die Funktionsweise eines Modulators nach einer ersten Ausführungsform der Erfindung.

Dabei wird der für eine Taktperiode $p_i$ bzw für den Impuls $z_i$ des Signalzugs z <u>vorliegende</u> Steuerwert $u_{s,i}$ von einem Mischer 7 dergestalt zu einem modifizierten Steuerwert $u_{s,i}^*$ abgewandelt, dass ein Pulsweitenmodulator 8 einen Impuls $z_i^*$ erzeugt, sodass das zeitliche Integral $S^*(t)$ über den Magnetisierungsstrom $i_m^*(t)$ in der ersten Hälfte oder in der Mitte der folgenden Taktperiode $T_{i+1}$ einen Absolutwert $AS_i^*$ erreicht, der mit dem Steuerwert $u_{s,i}$ vorgegeben wird, wobei der Mischer 7 zur Erstellung des Magnetisierungsstroms $i_m^*(t)$ das modifizierte pulsweitenmodulierte Signal $z_i^*$ benötigt und dieses Signal an den Eingang von Mischer 7 zurückgeführt ist.

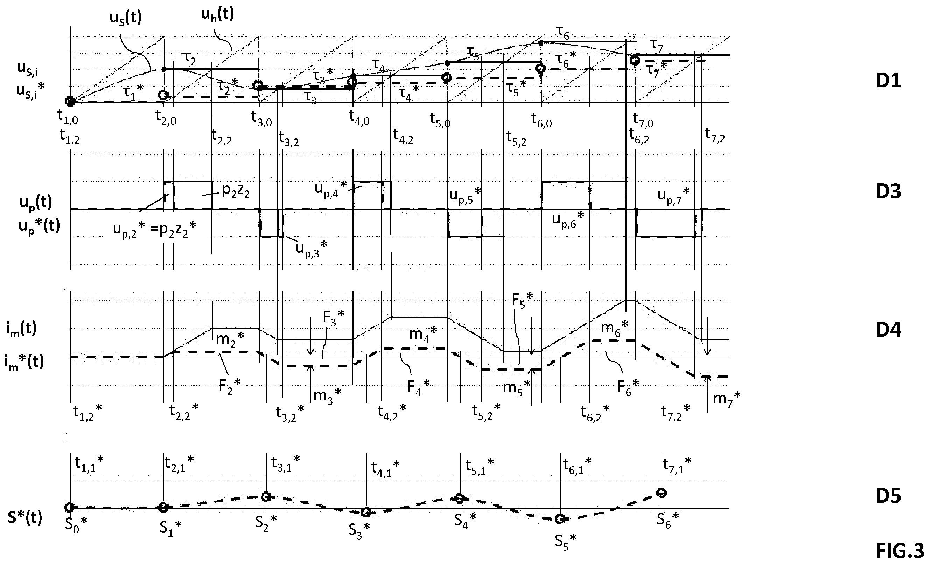

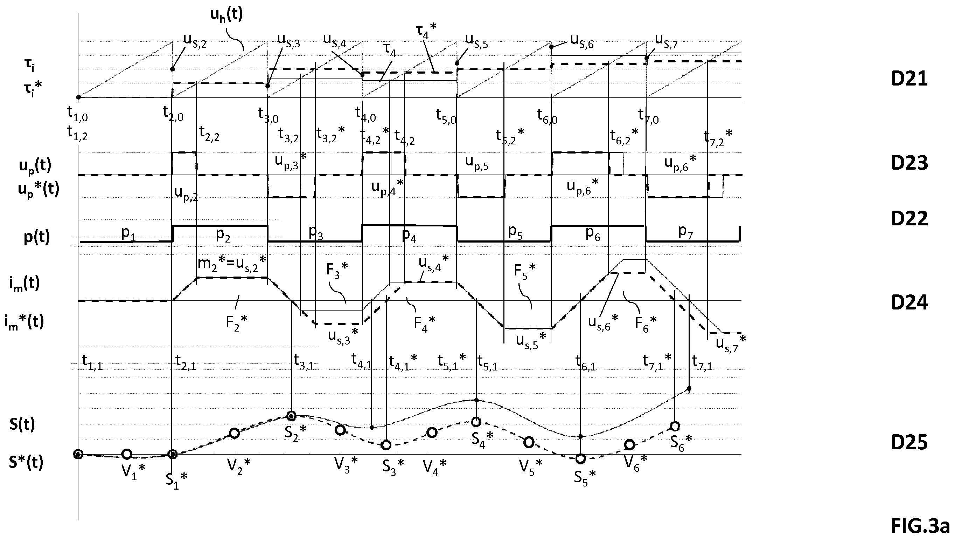

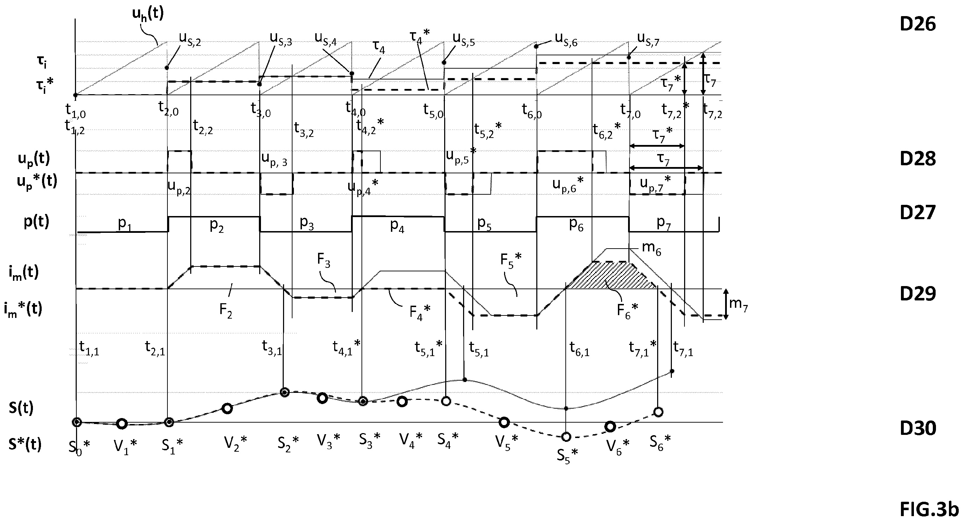

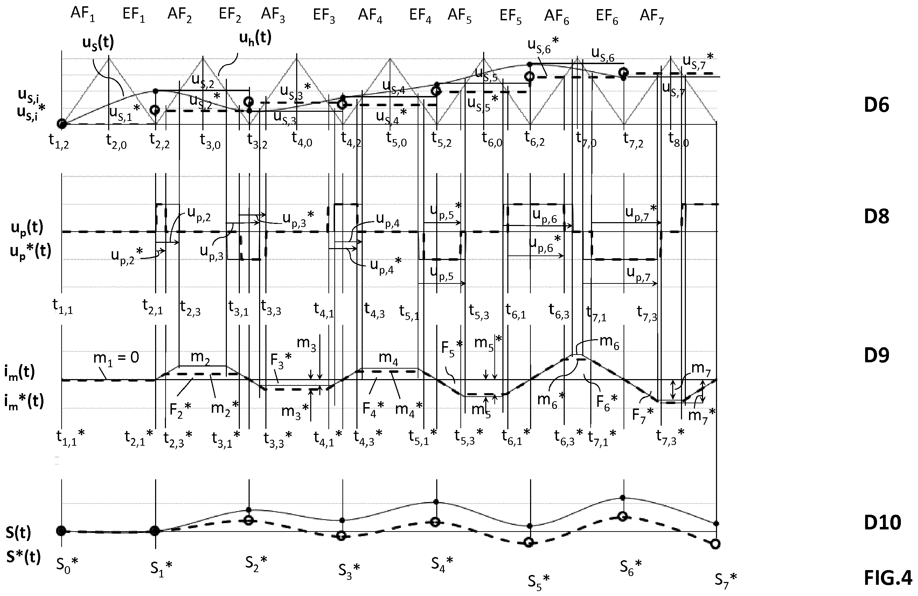

Mit $AS_i^*$ werden die Absolutwerte des Integrals $S^*(t)$ über den Magnetisierungsstrom $i_m^*(t)$ an den Zeitpunkten to des Stromnulldurchgangs von $i_m^*(t)$ bezeichnet, wobei sich dieser Nulldurchgang to (z.B. Zeitpunkte $t_{i,1}^*$ in Fig.3, Zeitpunkte $t_{i,2}$, in Fig.4) zeitlich in der ersten Hälfte von Ti befindet. Der Wert von $S^*(t)$ zu diesen Zeitpunkten beträgt

$$S^*(t_0)=S_i^*=p_i \cdot AS_i^*,$$

mit $AS_i^* = (1-u_{s,i}/2)^*u_{s,i}/2$ (Gleichung 1),

wobei $S_i^*$ erst in der folgenden Taktperiode $T_{i+1}$ auftritt.

**Fig. 3** zeigt schematisch die Zeitverläufe des Schaltreglers 10 mit Modulator 8 mit sägezahnförmiger Hilfsspannung $u_h(t)$ und gemäß einer ersten Ausführungsform der Erfindung.

Der Eingangswert des Modulationsverfahrens ist das bereits erwähnte Sollwertsignal $u_s(t)$, das eine Pulsdauer $\tau_i$ bzw. die Zeitdauer der Energieübertragung über den Transformator 2 vorgibt. Das Sollwertsignal $u_s(t)$ ist im vorliegenden Ausführungsbeispiel zeitlich veränderlich ausgestaltet. Es wird ein Schalttakt $p_i$ vorgegeben, worin jeweils ein Impuls $z_i$ des Modulationssignals $z(t)$ und ein Impuls der Transformatorprimärspannung $u_P(t)$ mit der Polarität $p_i$ erzeugt wird, sodass, wie in nachfolgender Normierung beschrieben, $u_P(t)=p_i z_i$ gilt. Diese Gewichtung wird von dem Wechselrichter 1 automatisch durchgeführt bzw können aus dem Signal $z(t)$ weitere Signale erzeugt werden (zB Phase-Shifter), deren Differenz die alternierend positiven und negativen Impulse von $u_P(t)$ ergibt.

Die Dauer der Taktperioden kann je nach den Anforderungen an die Reaktionsgeschwindigkeit des Gesamtsystems typischerweise zwischen 5 $\mu$s und 500 $\mu$s festgesetzt werden.

Die durchgezogenen Zeitverläufe mit einem bekannten Schaltregler 10 ergeben sich, wenn der von Pulsweitenmodulator 4 in Fig.1 ausgegebene Impulszug $z(t)$ allein durch den Pulsweitenmodulator 8 in Fig. 2 ohne Vorfilter 7 erstellt wird.

**Diagramm D1** zeigt die periodische Hilfsspannung $u_h(t)$ und die Steuerspannung $u_s(t)$. Es sind sieben Perioden bzw. Taktperioden der Hilfsspannung $u_h(t)$ dargestellt, in denen die Hilfsspannung innerhalb einer Taktperiode Ti von einem Nullwert auf einen Maximalwert anwächst und am Ende der Taktperiode zu den Zeitpunkten $t_{i+1,0}$ auf den Nullwert springt. Für die zum Zeitpunkt $t_{i,0}$ beginnende Taktperiode $T_i$ wird der Steuerspannungswert $u_{s,i}=u_s(t_{i,0})$ für die Dauer der Taktperiode Ti konstant gehalten.

**Diagramm D3** zeigt die Ausgangsspannung $u_p(t)$ mit den vorzeichenbehafteten Impulsen $u_{p,i} = p_i z_i$. Bei jeder fallenden Flanke der Hilfsspannung zu den Zeitpunkten $t_{i,0}$ wird, sofern die Steuerspannung einen Minimalwert überschreitet, der Zustand von $u_p(t)$ von 0 auf +1 oder -1 geändert bzw. ein Impuls $z_i$ gestartet. Signal $u_p(t)$ ändert zum Zeitpunkt $t_{i,2}$ den Zustand von +1 oder -1 auf 0, bzw wird der Impuls $z_i$ abgeschaltet, wenn die Hilfsspannung $u_h(t)$ zu diesem Zeitpunkt $t_{i,2}$ den für die Taktperiode Ti geltenden Steuerwert $u_{s,i}$ erreicht hat.

**Diagramm D4** zeigt den Magnetisierungsstrom $i_m(t)$, der mit dem pulsweitenmodulierten Signal $z(t)$ erzeugt wird. Schon mit dem ersten Impuls wird der Transformator an die Sättigungsgrenze (=1) gesteuert, in Taktperiode 6 wird die zweifache Sättigungsgrenze erreicht. Es ist ersichtlich, dass allein durch Überdimensionierung des Eisenkerns noch keine schnelle Einstellung der Dauern $\tau_i$ der Impulse $z_i$ des pulsweitenmodulierten Signals $z(t)$ möglich wird.

Die Sättigungsgrenze ergibt sich aufgrund der Normierung zu 1. Damit sich einfache Formeln ohne Proportionalitätskonstanten ergeben, wird die dimensionsbehaftete Zeit t' durch die Dauer der Taktperiode Ti dividiert

$$t = t'/T_i, \qquad\qquad 2\,T_i = T_s = 1/f_s, \qquad f_s\ldots\text{Schaltfrequenz.}$$

Zwischen zwei aufeinanderfolgenden Nullwerten der periodischen Hilfsspannung $u_h(t)$ vergeht die Zeitspanne 1, gleiches gilt für den Maximalwert der Hilfsspannung.

Der Maximalwert der Hilfsspannung $u_h(t)$ ist zugleich der Maximalwert, mit dem die Steuerspannung $u_s(t)$ begrenzt ist. Die Steuerspannung $u_s(t)$ bezeichnet die dargestellte Steuerspannung mit Maximalwert 1. Die Hilfsspannung $u_h(t)$ bezeichnet die dargestellte Hilfsspannung mit Maximalwert 1.

Steuerspannung $u_s(t)=1$ bewirkt, dass eine ununterbrochene Energieübertragung erfolgt, weil das pulsweitenmodulierte Signal $z(t) = 1$ bleibt. Zu den Zeitpunkten $t_{i,0}$ schaltet die Primärspannung $u_p(t)$ vom Zustand 1, der $U^+$ entspricht, in den Zustand - 1, der $U^-$ entspricht, wobei der Schaltzustand Null übersprungen wird. Als Folge tritt zu Beginn und Ende der Taktperiode Ti eine maximale Magnetisierungsstromamplitude von mi=1 des Magnetisierungsstroms $i_m(t)$ auf, die dem Spitzenwert $I_{max}$ entspricht.

Bei der vorgenommenen Normierung lässt sich die Modulationsgleichung für die Pulsdauern $\tau_i$, das ist die die Zeit von $t_{i,0}$ bis $t_{i,2}$, worin der Zustand von $z(t)$ 1 ist, in Abhängigkeit vom Steuerwert $u_{s,i}$ direkt in der Form $\tau_i = u_{s,i}$ anschreiben.

Die volle Transformatorausnützung ergibt sich, wenn die Sättigungsgrenze mi=1 bei $u_{s,i}=1$ gerade erreicht wird. Die Verdopplung des Eisenquerschnitts des Transformatorkerns bzw das Verschieben der Sättigungsgrenze nach oben, z.B. auf 2, schafft keine Abhilfe.

**Diagramm D4** zeigt weiters den Magnetisierungsstrom $i_m^*(t)$ mit dem in den Taktperioden $T_i$ **(Diagramm D2)** auftretenden Spitzenwerten $m_i^*$, die sich aufgrund eines erfindungsgemäß modifizierten pulsweitenmodulierten Signals $z^*(t)$, welches in **Diagramm D3** dargestellt ist, einstellen, wobei für die Erstellung von Signal $z^*(t)$ der modifizierte Steuerwert $u_{s,i}^*$ aus **Diagramm D1** herangezogen wird. Der modifizierte Impuls $z_2^*$ mit der Dauer $u_{s,2}^*$ erzeugt die Magnetisierung $m_2^*$ bzw. den Integralbeitrag $F_2^*$, woraus sich der Wert $S_2^*$ aus **Diagramm D5** zum Zeitpunkt $t_{3,1}$ des nächsten Nulldurchgangs von $i_m^*(t)$ berechnet.

Sämtliche Ausführungsbeispiele zielen darauf ab, die Steuerspannung so zu manipulieren, dass der resultierende Integralwert $S_i$ langfristig innerhalb eines vorgegebenen Bereichs rund um Null bleibt. Dabei wird anhand des vorgegebenen Sollwerts $u_{s,i}^*$ jeweils ein Beitrag $F_i^*$ zum Integralwert $S_i^*$ ermittelt, der der Fläche zwischen Nulllinie und der vom Magnetisierungsstrom $i_m^*(t)$ vorgegebenen Geradenstücke entspricht. Da der Magnetisierungsstrom $i_m^*$ während eines Impulses, wenn $z^*(t)=1$, stets den Wert Null aufweist oder durchschreitet, können die einzelnen Beiträge $F_i^*$ unmittelbar aus dem jeweiligen Sollwert $u_{s,i}^*$ für die betreffende Taktperiode $p_i$ abgeleitet werden. Umgekehrt wird hier aus dem notwendigen Beitrag $F_i^*$ der modifizierte Steuerwerts $u_{s,i}^*$ berechnet, damit, wie dies in **Diagramm D5** dargestellt ist, sich zufolge von $z_i^*$ der gewünschte Wert von $S_i^*$ einstellt.

Bei der ersten erfindungsgemäßen Vorgehensweise wird mit dem Steuerwert $u_{s,i}$ bzw. dem Impuls $z_i^*$ das Integral auf den Wert $S_i^*$ nach Gleichung 1 (siehe oben bzw. nachstehend) gebracht.

$$|S_i^*| = AS_i^*, \text{ mit } AS_i^* = (1-u_{s,i}/2)^*u_{s,i}/2 \qquad \text{(Gleichung 1)}$$

$AS_i^*=F_i/2$, stationär, also $u_{s,i}=u_{s,i-1}$

Das modifizierte pulsweitenmodulierte Signal $z^*(t)$ weist die gleichen Einschaltzeitpunkte $t_{i,0}$ auf, wie das unmodifizierte Signal $z(t)$. Zum Einschaltzeitpunkt $t_{3,0}$ von Impuls $z_3^*$ liegt die Magnetisierung $m_2^*$ vor. Während des negativen Impulses $z_3^*$ nimmt der Magnetisierungsstrom $i_m^*(t)$ ab und erreicht zum Abschaltzeitpunkt $t_{3,2}$ den Absolutwert $m_3$. Aufgrund der Normierung gilt $u_{s,3}^*=(m_2^*+m_3^*)/2$ , bzw allgemein

$$u_{s,i}^* = (m_i^* + m_{i-1}^*)/2. \qquad \text{(Gleichung 2)}$$

Die Integralbeiträge $F_i^*$ ergeben sich zu

$$F_i^* = m_i \cdot (1 - m_{i-1}/2). \qquad \text{(Gleichung 3)}$$

Der Integralbeitrag $F_3^*$ ergibt sich als Betrag der Differenz der Werte $AS_2^*$ und $AS_3^*$ des Integrals $S^*(t)$ zu den Zeitpunkten $t_{3,1}^*$ und $t_{4,1}^*$, wobei $AS_2^*$ durch $u_{s,2}$ und $AS_3^*$ durch $u_{s,3}$ vorgegeben sind, nach Gleichung 1. Der geforderte Integralbeitrag $F_3^*$ hat somit $AS_2^* + AS_3^*$, allgemein

$$F_i^* := AS_{i-1}^* + AS_i^*, \qquad \text{(Gleichung 4)}$$

zu betragen.
Aus Gleichung 3 ergibt sich

$$m_i^* = F_i^*/(1 - m_{i-1}^*/2),$$

worauf mit Gleichungen 2 und 4 der modifizierte Steuerwert $u_{s,i}^*$ berechnet werden kann zu

$$u_{s,i}^* = m_{i-1}^*/2 + (AS_{i-1}^* + AS_i^*)/(2 - m_{i-1})$$

Beispielsweise kann der neue Steuerwert $u_{s,3}$ schon inmitten der vorhergehenden Taktperiode $T_2$ festgestellt, und der modifizierte Steuerwert $u_{s,3}^*$ bis zum Zeitpunkt $t_{3,0}$, zu dem $z_3^*$ gestartet wird, berechnet sein.
Der Wert $AS_i$ ist vorzugsweise im Bereich 0 bis 0,25 beschränkt.
**Fig. 4** zeigt schematisch die Zeitverläufe des Schaltreglers 10 mit einem Pulsweitenmodulator 8 mit dreieckförmiger Hilfsspannung $u_h(t)$ gemäß der ersten Ausführungsform der Erfindung.
Zur Veranschaulichung der Bestimmung der Umschaltzeitpunkte $t_{i,1}$ und $t_{i,3}$ des modulierten Signals $z(t)$, **Diagramm D8,** bestehend aus den aufgrund der Steuerwerte $u_{s,i}$ und $u_{s,i-1}$ und dem Schalttakt pi, **Diagramm D7,** erstellten Impulsen $u_{p,i}$ wird das folgende Hilfssignal $u_h(t)$, **Diagramm D6,** näher betrachtet. Dieses Hilfssignal $u_h(t)$ fällt in der ersten Hälfte der Taktperiode $T_i$ vom zeitlichen Beginn $t_{i,0}$ bis zum zeitlichen Mittelpunkt $t_{i,2}$ der Taktperiode Ti linear vom Einswert auf den Nullwert ab und steigt über die zweite Hälfte der Taktperiode Ti vom zeitlichen Mittelpunkt $t_{i,2}$ bis zum Ende dieser Signalperiode Ti zum Zeitpunkt $t_{i+1,0}$ vom Nullwert zum Einswert linear an. Anstelle eines linearen Ansteigens oder Abfallens kann jede andere, insbesondere monotone, Signalform gewählt werden, die symmetrisch um den zeitlichen Mittelpunkt $t_{i,2}$ der Taktperiode Ti ist.
Zur Bestimmung des Einschaltzeitpunkts $t_{i,1}$ von $z_i$ während der Zeitabschnitte von $t_{i,0}$ bis $t_{i,2}$ der abnehmenden Hilfsspannung (im Folgenden als Einschaltfenster $EF_{i-1}$ bezeichnet), an dem das Modulationssignal $z(t)$ eine steigende Flanke erhält, werden der vorhergehend festgestellte Steuerwert $u_{s,i-1}$ und das Hilfssignal $u_h(t)$ bei fallender Flanke miteinander verglichen, wobei der Zeitpunkt $t_{i,1}$ der steigenden Flanke von $z(t)$ an denjenigen Zeitpunkt gesetzt wird, in dem der Steuerwert $u_{s,i-1}$ dem Wert der fallenden Flanke des Hilfssignals $u_h(t)$ entspricht. Liegt, wie im vorliegenden Fall dargestellt, der Steuerwert $u_{s,i}$ zwischen dem Minimalwert und dem Maximalwert für das Sollwertsignal $u_s$, so erfolgt eine Umschaltung zu einem Zeitpunkt $t_{i,1}$, wobei das Verhältnis $(t_{i,2}-t_{i,1}):(t_{i,2}-t_{i,0})$ dem Verhältnis $u_{s,i-1}:2\,u_{max}$ entspricht. Aufgrund der Normierung entspricht die Zeitspanne $(t_{i,2}-t_{i,1})$ dem vorangegangenen Steuerwert $u_{s,i-1}/2$.
Die Auswertung des aktuellen Steuerwerts $u_{s,i}$ erfolgt im Ausschaltfenster AFi der Taktperiode Ti. Zur Bestimmung des Ausschaltzeitpunkts $t_{i,3}$, von $z_i$ während der Zeitabschnitte von $t_{i,2}$ bis $t_{i+1,0}$ der zunehmenden Hilfsspannung (im Folgenden als Ausschaltfenster AFi bezeichnet), an dem das Modulationssignal $z(t)$ eine abfallende Flanke erhält, werden der neue Sollwert $u_{s,i}$ und das Hilfssignal $u_h(t)$ bei steigender Flanke miteinander verglichen, wobei der Zeitpunkt $t_{i,3}$ der abfallenden Flanke an denjenigen Zeitpunkt gesetzt wird, in dem der neue Steuerwert $u_{s,i}$ dem Wert der ansteigenden Flanke des Hilfssignals $u_h(t)$ entspricht. Liegt, wie im vorliegenden Fall dargestellt, der Steuerwert $u_{s,i}$ zwischen dem Minimalwert und dem Maximalwert für das Sollwertsignal $u_s$, so erfolgt eine Umschaltung zu einem Zeitpunkt $t_{i,3}$, wobei das Verhältnis $(t_{i,3}-t_{i,2}):(t_{i+1,0}-t_{i,2})$ dem Verhältnis $u_{s,i}:2\,u_{max}$ entspricht. Aufgrund der Normierung entspricht die Zeitspanne $(t_{i,3}-t_{i,2})$ dem im Ausschaltfenster $AF_i$ vorliegenden Steuerwert $u_{s,i}/2$.
Die Pulsdauer $\tau_i$ von $z_i$ ist die Zeitspanne $(t_{i,2}-t_{i,1})$, die dem Steuerwert $u_{s,i-1}/2$ gleich ist plus der anschließenden Zeitspanne $(t_{i,3}-t_{i,2})$, die zahlenmäßig dem neuen Steuerwert $u_{s,i}/2$ gleicht. Das bekannte Modulationsgesetz lautet

$$\tau_i = (u_{s,i-1} + u_{s,i})/2.$$

Der erzeugte Magnetisierungsstrom $i_m(t)$ ist in **Diagramm D9** dargestellt. Das Spannungssignal $u_p(t)$ wird an den Transformator 2 angelegt, wobei der Magnetisierungsstrom bei Vorgabe einer zeitlich stückweise konstanten Spannung linear verläuft. Weist der Ausgang $u_p(t)$ des Wechselrichters 1 den Wert 1 auf, steigt der Wert des Magnetisierungsstroms $i_m(t)$ linear an. Weist der Ausgang $u_p(t)$ des Wechselrichters 1 den Wert -1 auf, fällt der Wert des Magnetisierungsstroms $i_m(t)$ mit derselben Steigung linear ab. Weist der Ausgang $u_p(t)$ des Wechselrichters 1 einen Nullwert auf, bleibt der Wert des Magnetisierungsstroms $i_m(t)$ unverändert. Durch die Normierung, weil bei $u_s(t)=1$ auch $m_i=1$, gilt auch die folgende zahlenmäßige Gleichheit: $m_i=u_{s,i}$ und $\tau_i=(m_{i-1}+m_i)/2$, siehe auch Fig.3b, Taktperiode $p_7$.

**Diagramm D10** zeigt das zeitliche Integral $S(t)$ über den Magnetisierungsstrom $i_m(t)$, durchgezogener Verlauf, mit den berechneten Werten $S_{i-1}$ für die Zeitpunkte $t_{i,2}$ des folgenden Nulldurchgangs des Magnetisierungsstroms. Ohne Abhilfemaßnahme kann das Integral $S(t)$ über alle Grenzen wachsen.

Das erfindungsgemäß modifizierte pulsweitenmodulierte Signal $z^*(t)$ wird aufgrund der modifizierten Steuerwerte $u_{s,i}^*$ erstellt. Der Integralbeitrag $F_i^*$ ist mit Gleichung 4 und Gleichung 1 durch den aktuellen Steuerwert $u_{s,i}$ vorgegeben. Die Integralbeiträge $F_i^*$ berechnen sich nun zu $F_i^*=U_{s,i}^* \cdot (1-u_{s,i}^*/2)$, worauf die modifizierte Steuerspannung $u_{s,i}^*$ nach der Formel

$$u_{S,i}^* = 1 - \sqrt{1 - 2 \cdot F_i^*} \ ,$$

berechnet wird.

Bei dieser Vorgehensweise bleibt $S^*(t)$ bzw bleiben die Werte $S_i^*$ vorzugsweise im Bereich +-0,25 beschränkt (Gleichung 1).

## Steigerung der Stellgeschwindigkeit

## Erfindungsgemäßes Verfahren auf Basis der Entscheidung darüber, ob der neue Steuerwert größer oder kleiner sein darf, als der vorhergehende

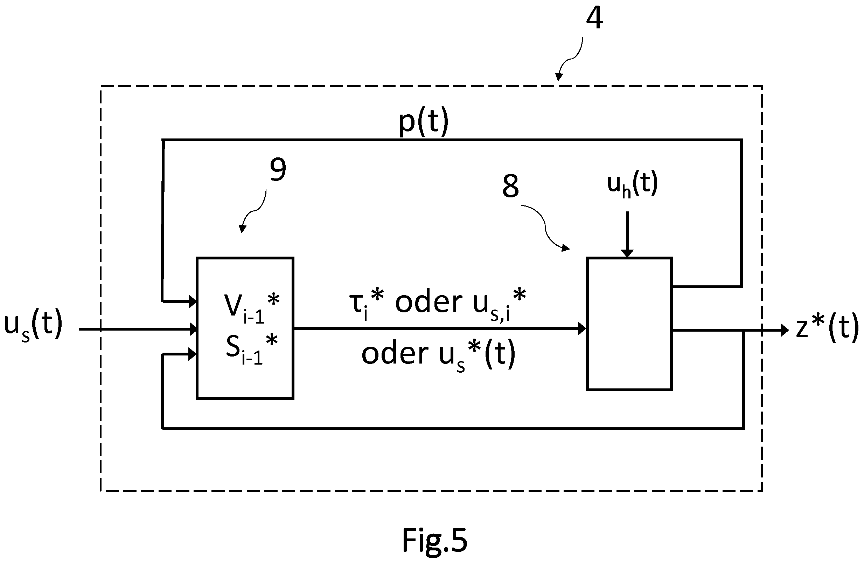

**Fig. 5** zeigt schematisch das gleiche Schaltbild eines erfindungsgemäßen Pulsweitenmodulators 4 wie Fig.2, jedoch eine alternative Vorgehensweise in Mischer 9, die eine schnellere Adaptierung des Signals $z^*(t)$ an die Steuerspannung $u_s(t)$ gewährleistet, wobei $S^*(t)$ im Bereich +-0,5 beschränkt bleibt.

Hierzu wird aus der Hilfsspannung $u_h(t)$ das zwei mögliche Zustände aufweisende Polaritätssignal $p(t)$ mit den Zuständen $p_i$ erzeugt, wobei sich der Zustand von $p(t)$ zu den Zeitpunkten $t_{i,0}$, bei denen die Hilfsspannung ihren Maximalwert aufweist, ändert, wobei Taktzustand $p_i = 1$ den Wert 1 und Zustand $p_i = 0$ den Wert -1 bedeutet. Mit $p_i$ wird die Taktperiode Ti dann bezeichnet, wenn die Polarität $p_i$ der Taktperiode Ti mit gemeint oder nur der in Taktperiode Ti geltende Wert $p_i = +1$ oder $p_i = -1$ gemeint ist.

Dem Mischer 9 wird die Steuerspannung $u_s(t)$ zugeführt, sowie das Signal $p(t)$. Der Mischer 9 gibt eine abgewandelte Steuerspannung $u_s^*(t)$ aus, die von dem Pulsweitenmodulator 8 zum pulsweitenmodulierten Signal $z^*(t)$ verarbeitet wird. Der im Impuls $z_i^*$ verarbeitete Steuerwert $u_{s,i}$ kann insbesondere erst durch die Impulsabschaltung von $z_i^*$, bei ansteigender Hilfsspannung, durch Verschneidung der Steuerspannung $u_s^*(t)$ mit der Hilfsspannung $u_h(t)$ ermittelt werden. Abhängig von den Werten $V_{i-1}$ oder $V_{i-1}$ und $S_{i-1}$ schaltet Mischer 9 in der Zeit, in der die Hilfsspannung vom Nullwert auf den 1-Wert anwächst, die Steuerspannung $u_s(t)$ entweder an den Ausgang durch, oder unterbindet ein Zunehmen oder ein Abnehmen der Steuerspannung gegenüber dem vorhergehenden Wert $u_{s,i-1}$, oder gibt den Nullwert 0 aus.

Grundsätzlich sind unterschiedliche Methoden zu Regelung bzw Begrenzung des Integralwerts $S_i$ möglich. Die Integralwerte $S_{i-1}$ und/oder $V_{i-1}$ werden dazu benutzt, das vorgegebene Sollwertsignal $u_s(t)$ derart zu manipulieren, dass der resultierende Integralwert $S_i$ langfristig innerhalb eines vorgegebenen Bereichs rund um Null bleibt, beispielsweise zwischen zwei Grenzwerten $S_{max}$, $S_{min}$, die vorzugsweise symmetrisch um den Wert Null liegen: $S_{max} = -S_{min}$. Überschreitet der Integralwert $S_i$ den oberen Grenzwert $S_{max}$ oder unterschreitet der Integralwert $S_i$ den unteren Grenzwert $S_{max}$ ist es möglich, das Sollwertsignal bzw den aktuellen Sollwert derart zu manipulieren, dass der Betrag des Integralwerts $S_i$ jedenfalls nicht mehr steigt.

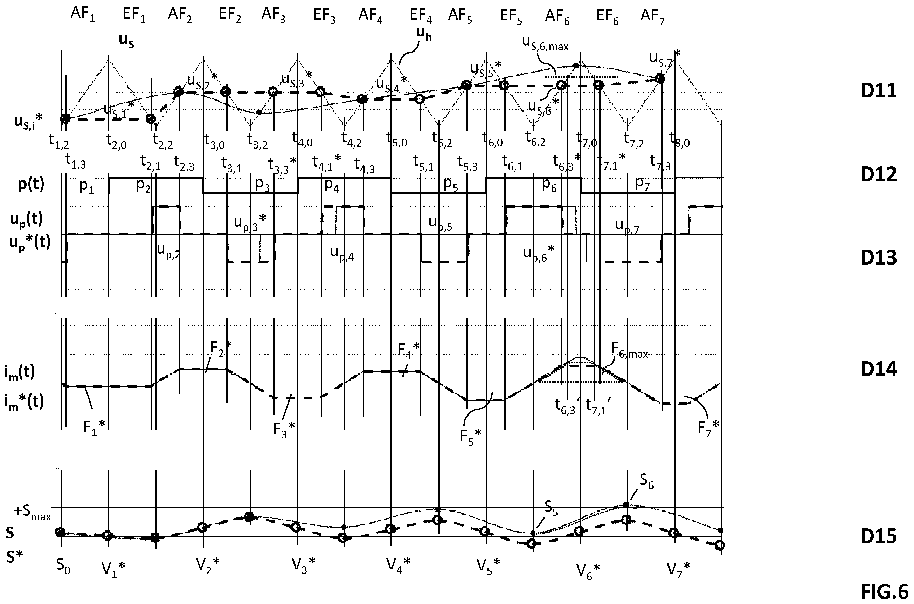

In dem in Fig. 6 dargestellten Fall würde der Integralwert $S_6$ den oberen Grenzwert $S_{max}$ gegen Ende der sechsten Taktperiode $p_6$ (= $EF_5 + AF_6$) überschreiten. Um zur Erstellung des Modulationssignals z rechtzeitig eine Umschaltung vornehmen zu können, wird für den Ausschaltzeitpunkt $t_{6,3}$ ein Maximalwert in Form eines spätest möglichen Zeitpunkts festgelegt. Dieser Zeitpunkt $t_{6,3}'$ entspricht dem Zeitpunkt innerhalb des Ausschaltfensters $AF_6$, an dem die steigende Flanke des Hilfssignals $u_h$ den maximalen Sollwert $u_{s,6,max}$ aufweist. Ist das Sollwertsignal $u_s$ bis zu

diesem Zeitpunkt größer als das Hilfssignal $u_h$, so wird das Modulationssignal z zu diesem Zeitpunkt $t_{6,3}'$ vom Pegelwert 1 auf den Nullwert 0 gesetzt. Erreicht die fallende Flanke des Hilfssignals $u_h$ den zuvor ermittelten maximalen Sollwert $u_{s,6,max}$ wird das Modulationssignal z zu diesem Zeitpunkt $t_{7,1}'$ vom Nullwert 0 auf den Pegelwert 1 gesetzt.

Mit der Ermittlung von $S_5$ in der fünften Taktperiode $p_5$ ist bereits klar, wie groß der vorgegebene Sollwert $u_{s,6}$ für die sechste Taktperiode $p_6$ maximal sein darf, damit der Integralwert innerhalb der vorgegebenen Grenzen, dh unterhalb des oberen Grenzwerts $S_{max}$ bleibt. Dieser maximale Sollwert $u_{s,6,max}$, punktiert eingezeichnet, kann dabei so gewählt werden, dass sich aufgrund des maximalen Sollwerts $u_{s,6,max}$ ein Beitrag $F_{6,max}$, punktiert eingezeichnet, zum Integralwert $S_i$ ergibt, sodass der Integralwert $S_6$ in der Taktperiode $p_7$ dem betreffenden Grenzwert $S_{max}$ entspricht, punktiert eingezeichnet. Im vorliegenden Fall liegt der durch das Sollwertsignal vorgegebene Sollwert $u_{s,6}$ über dem maximalen Sollwert $u_{s,6,max}$, sodass anstelle des vorgegebenen Sollwerts $u_{s,6}$ der maximale Sollwert $u_{s,6,max}$ herangezogen wird.

Dabei wird vorzugsweise der Wert $S_i$ zu $S_{max}$ abgewandelt, der Integralbeitrag zu $F_i^*=S_{max}-S_{i-1}$ und aus $F_i^*$ der modifizierte Steuerwert $u_{s,i}^*$ berechnet.

**Fig.3a** zeigt eine erste Variante des zweiten erfindungsgemäßen Vorgehens mit dem Pulsweitenmodulator 8 mit sägezahnförmiger Hilfsspannung $u_h(t)$, wobei die Pulsdauer $\tau_i^*$ nach $\tau_i^*=(u_{s,i-1}^*+u_{s,i}^*)/2$ berechnet wird und wobei der Wert $u_{s,i}^*$ entweder dem Wert $u_{s,i}$ gleicht oder fallweise zu $u_{s,i}^*$ modifiziert wird.

Im Rahmen der Erstellung der Impulse der pulsweitenmodulierten Primärwechselspannung $u_p^*(t)$, **Diagramm D23, wird** der Magnetisierungsstroms $i_m^*(t)$, **Diagramm D24,** ständig mitberechnet. Dabei kann anhand des vorgegebenen Sollwerts $u_{s,i}^*$ jeweils ein Beitrag $F_i^*$ zum Integralwert ermittelt werden, der der Fläche zwischen Nulllinie und der vom Magnetisierungsstrom $i_m^*$ vorgegebenen Geradenstücke entspricht. Da der Magnetisierungsstrom $i_m^*(t)$ in jeder Taktperiode $p_i$ stets den Wert Null aufweist, können die einzelnen Beiträge $F_i^*$ unmittelbar aus dem jeweiligen Steuerwerten $u_{s,i-1}^*$, $u_{s,i}^*$ abgeleitet werden. Die Beiträge $F_i^*$ werden dabei abwechselnd mit unterschiedlichem Vorzeichen versehen und zum Wert $V_i$ akkumuliert bzw aufaddiert, mittels einer modellbasierten Berechnung des Integralmittelwertes $V_i^*$, $V_i^* = V_{i-1}^* + p_{i-1}F_{i-1}^*/2 + p_iF_i^*/2 = V_{i-1}^* + p_i(F_i^* - F_{i-1}^*)/2$, wie dies in **Diagramm D25** für die $V_i^*$ zufolge des modifizierten (strichliert dargestellt) pulsweitenmodulierten Signals $z^*(t)$ dargestellt ist. Bei der alternativen zweiten Vorgehensweise bleiben die Werte $S_i^*$ im Bereich $+-0,5$ beschränkt, wobei fallweise anstelle des Steuerwerts $u_{s,i}$ der Steuerwert $u_{s,i}^*=u_{s,i-1}^*$ in **Diagramm 21** den Zeitpunkt $t_{i,2}$ der Pulsabschaltung des Impulses $z_i^*$ bzw $u_{p,i}^*$ in **Diagramm D23 bestimmt.**

Für das weitere Vorgehen wird für die einzelnen Taktzustände $p_i$ jeweils zu Beginn der jeweiligen Taktperiode $T_i$ ein Mittelwert $V_{i-1}^*$ des Integrals $S^*(t)$ ermittelt, der vor der jeweiligen Taktperiode $T_i$ auftritt. So wird beispielsweise im vorliegenden Fall der in der positiven Taktperiode $p_2 = 1$ auftretende Mittelwert $V_2^*$ als arithmetisches Mittel zwischen dem Integralwert $S_1^*$ zum Zeitpunkt $t_{2,1}$ in der Taktperiode $T_2$ und dem Integralwert $S_2^*$ zum Zeitpunkt $t_{3,1}$ in der Taktperiode $T_3$ ermittelt. Der Mittelwert $V_2^*$ tritt in der Mitte der Zeitpunkte $t_{2,1}^*$ des Auftretens von $S_1^*$ und $t_{3,1}^*$ des Auftretens von $S_2^*$ auf. Die Werte $V_2^*$ und $S_2^*$ stehen mit dem modifizierten Steuerwert $u_{s,2}^*$ zum Zeitpunkt $t_{3,0}$ für die Taktperiode $T_3$ fest.

Die im Folgenden dargestellte Regelvorschrift sieht vor, dass, soferne $V_{i-1}^* \neq 0$ ist, der Mischer 9 abhängig vom Verhalten der aus der Steuerspannung $u_s(t)$ abgetasteten Steuerwerte $u_{s,i-1}$, $u_{s,i}$, vom Vorzeichen des Mittelwerts $V_i^*$ und von Polaritätszustand $p_i$ des Taktes $T_i$ für die Abschaltung von Impuls $z_i$ in Taktperiode Ti entweder den neuen Steuerwert $u_{s,i}$ oder den alten eventuell modifizierten Steuerwert $u_{s,i-1}^*$ an den Pulsweitenmodulator 8 ausgibt.

$i = 0$: $u_{s,0}^*$ , $F_0^*$ , $V_0^* = 0$

Start

$i := i+1$

einlesen/laden/abtasten von $u_{s,i}$

wenn $V_{i-1}^* = 0$

dann gehe zu Berechnung mit $u_{s,i}^* := u_{s,i}$

sonst wenn

A: $[u_{s,i} > u_{s,i-1}^*$ und $sign(V_{i-1}^*) = p_i]$ oder B: $[u_{s,i} < u_{s,i-1}^*$ und $sign(V_{i-1}^*) \neq p_i]$

dann gehe zu Berechnung mit $u_{s,i}^* := u_{s,i-1}^*$

sonst gehe zu Berechnung mit $u_{s,i}^* := u_{s,i}$

wobei für die Berechnung gilt

$$F_i^* = u_{S,i}^* \cdot \left(1 - \frac{u_{S,i-1}^*}{2}\right)$$

$$V_i^* = V_{i-1}^* + p_i \cdot \frac{F_i^* - F_{i-1}^*}{2}$$

$$\tau_i^* = \frac{u_{S,i-1}^* + u_{S,i}^*}{2}$$

In einem Taktzustand $p_i$ erfolgt eine Ausgabe von dem Wert $\tau_i^*$ an den PWM 8.

Anschließend wird das Verfahren bei Start fortgesetzt.

Es gilt dabei $\tau_i^* = \frac{u_{S,i-1}^* + u_{S,i}^*}{2} = \frac{m_{i-1}^* + m_i^*}{2}$ und ergo $u_{s,i}^* = m_i^*$.

Im Folgenden wird noch näher auf die **Diagramme 20-25** eingegangen:

Die Pulserzeugung wird nach Initialisierung mit den Startwerten gestartet, indem i um 1 auf 1 erhöht wird. Der Steuerwert $u_{s,1}$ steht bereit.

Da $V_0^* = 0$ ist, wird der neue Steuerspannungswert $u_{s,1}$, hier Null, verwendet, $u_{s,1}^* = u_{s,1} = 0$. $F_1^*$ und $V_1^*$ werden auch zu Null berechnet.

Zum Zeitpunkt $t_{1,0}$ liegen die erste Pulsdauer $\tau_1^* = 0$ und $V_1^* = 0$ vor und es beginnt ein neuer Durchlauf mit Erhöhung von i um 1 auf 2.

In $p_1$ steht der Steuerspannungswert $u_{s,2} > 0$ bereit. Da $V_1^*$ Null ist, wird der neue Steuerspannungswert verwendet, $u_{s,2}^* = u_{s,2}$.

Die Pulsdauer $\tau_2^*$ wird ermittelt, vorliegend zum Beginn $t_{2,0}$ und ausgegeben an den PWM 8 während des Taktzustands $p_2$. Der Wert $V_2^*$ wird berechnet zur Entscheidung über den Steuerwert während $p_3$.

Zum Zeitpunkt $t_{2,0}$ liegt die Pulsdauer $\tau_2^* = 0$ vor und es startet ein neuer Durchlauf mit der Erhöhung von i um 1 auf 3.

Zu Beginn der Taktperiode $T_3$ liegen zum Zeitpunkt $t_{3,0}$ der neue Steuerwert $\tau_3^*$ sowie der Integralmittelwert $V_2^* > 0$ aus $p_2$ vor. Im aktuellen Zustand $p_3 = -1$ wird der erzeugte Impuls $z_3^*$ negativ gezählt. Die Ablaufsteuerung überprüft, ob $u_{s,3}$ größer oder kleiner ist, als der alte Steuerwert $u_{s,2}^*$. In dem gezeigten Beispiel ist letzteres der Fall, weshalb Bedingung B zur Anwendung kommt. Das Vorzeichen von $p_3$ und $V_2^*$ sind entgegengesetzt. Auch das ist richtig, weshalb der Abschaltzeitpunkt $t_{3,2}$ durch den alten Steuerwert $u_{s,3}^* = u_{s,2}^*$ bestimmt wird.

Eine Absteuerung (Verringerung des Steuerwerts) bei positiver Verschiebung $V_{i-1}^*$ wird nur bei positiver Polarität von $u_{p,i}$ bei $p_i = 1$ zugelassen, was hier allerdings nicht der Fall ist, weshalb die Abschaltung von $u_{p,3}^*$ durch den Wert $u_{s,2}^*$ festgelegt wird.

In $T_3$ wird mit $z_3^*$ die vorliegende Pulsdauer $\tau_3^*$ ausgegeben und der folgende Integralmittelwert $V_3^*$ berechnet und wieder an den Start gegangen. Es folgt die Erhöhung von i um 1 auf 4 zur Ermittlung von $\tau_4^*$.

Zu Beginn der Taktperiode $T_4$ liegen zum Einschaltzeitpunkt $t_{4,0}$ von $z_4^*$ dessen Dauer $\tau_4^*$, sowie der Integralmittelwert $V_3^* > 0$ aus Taktperiode $p_3$ vor. Im aktuellen Zustand $p_4 = +1$ wird der erzeugte Impuls $z_4^*$ positiv gezählt. Es wird festgestellt, dass $u_{s,4}$ kleiner ist, als der alte Steuerwert $u_{s,3}^*$. Über eine Verringerung des Steuerwerte entscheidet Bedingung B. Das Vorzeichen von $p_4$ und $V_3^*$ stimmen aber überein, weshalb der Abschaltzeitpunkt $t_{4,2}$ durch den neuen Steuerwert $u_{s,4}^* = u_{s,4}$ bestimmt wird.

Eine Absteuerung (Verringerung des Steuerwerts) bei positiver Verschiebung $V_{i-1}^*$ wird nur bei positiver Taktperiode $p_i = 1$ zugelassen, was hier der Fall ist, weshalb die Abschaltung von $z_4$ durch den neuen Steuerwert $u_{s,4}^* = u_{s,4}$ bestimmt ist.

In $p_4$ wird mit $z_4^*$ die vorliegende Pulsdauer $\tau_4^*$ ausgegeben und der folgende Integralmittelwert $V_4^*$ berechnet und wieder an den Start gegangen. Es folgt die Erhöhung von i um 1 auf 5 zur Ermittlung von $\tau_5^*$.

Zu Beginn der Taktperiode $T_5$ liegen zum Einschaltzeitpunkt $t_{s,0}$ von $z_5^*$ dessen Dauer $\tau_5^*$, sowie der Integral-

mittelwert $V_4^* > 0$ aus Taktperiode $p_4$ vor. Im aktuellen Zustand $p_5 = -1$ wird der erzeugte Impuls $z_5^*$ negativ gezählt. Es wird festgestellt, dass $u_{s,5}$ größer ist, als der alte Steuerwert $u_{s,4}^*$. Über eine Vergrößerung des Steuerwertes entscheidet Bedingung A. Das Vorzeichen von $p_5$ und $V_4$ stimmen aber nicht überein, weshalb der Abschaltzeitpunkt $t_{5,2}$ durch den neuen Steuerwert $u_{s,5}^* = u_{s,5}$ bestimmt wird.

Eine Aufsteuerung (Vergrößerung des Steuerwerts) bei positiver Verschiebung $V_{i-1}^*$ wird nur bei negativen Zuständen $p_i = -1$ zugelassen, was hier der Fall ist, weshalb die Abschaltung von $z_5^*$ durch den neuen Steuerwert $u_{s,5}^* = u_{s,5}$ festgelegt wird.

In $p_5$ wird mit $z_5^*$ die vorliegende Pulsdauer $\tau_5^*$ ausgegeben und der folgende Integralmittelwert $V_5^*$ berechnet und wieder an den Start gegangen. Es folgt die Erhöhung von i um 1 auf 6 zur Ermittlung von $\tau_6^*$.

Zu Beginn der Taktperiode $T_6$ liegen zum Einschaltzeitpunkt $t_{6,0}$ von $z_6^*$ dessen Dauer $\tau_6^*$, sowie der Integralmittelwert $\overline{V_5^* > 0 \text{ aus Taktperiode } p_5}$ vor. Im aktuellen Zustand $p_6 = +1$ wird der erzeugte Impuls $z_6^*$ positiv gezählt. Es wird festgestellt, dass $u_{s,5}$ größer ist, als der alte Steuerwert $u_{s,4}^*$. Über eine Vergrößerung des Steuerwertes entscheidet Bedingung A. Das Vorzeichen von $p_6$ und $V_5^*$ stimmen überein, weshalb in diesem Fall der Abschaltzeitpunkt $t_{6,2}$ durch den alten Steuerwert $u_{s,6}^* = u_{s,5}^*$ bestimmt wird.

Eine Aufsteuerung (Vergrößerung des Steuerwerts) bei positiver Verschiebung $V_{i-1}^*$ wird nur bei negativen Zuständen $p_i = -1$ zugelassen, was hier nicht der Fall ist, weshalb die Abschaltung von $z_5^*$ durch den alten Steuerwert $u_{s,6}^* = u_{s,5}$ festgelegt wird.

Prinzipiell wird einem Anwachsen des Integrals $S^*(t)$ über +-0,5 hinaus bereits vorgebeugt, wenn entweder nur die Verringerung oder nur die Vergrößerung von $u_{s,i}^*$ gegenüber $u_{s,i-1}^*$ nur dann erfolgen kann, wenn dadurch der Integralmittelwert $V_i^*$ gegenüber $V_{i-1}^*$ verringert wird oder das Vorzeichen wechselt. Beispielhaft wird bei dieser Variante des Vorgehens im Sinne einer schnellen Strombegrenzung die Verringerung des Steuerwerts immer erlaubt und eine optionale Maßnahme beschrieben, die den Vorzeichenwechsel von $V^*$ beschleunigt.

**Fig.3b** zeigt eine zweite Variante des zweiten alternativen Vorgehens mit dem ersten Pulsweitenmodulator 8 mit sägezahnförmiger Hilfsspannung $u_h(t)$, wobei die Pulsdauer $\tau_i^*$ nach $\tau_i^* = (u_{s,i-1}^* + u_{s,i}^*)/2$ berechnet wird und wobei der Wert $u_{s,i}^*$ entweder dem Wert $u_{s,i}$ gleicht oder fallweise zu $u_{s,i-1}^*$ oder zu 0 modifiziert wird, wodurch der Vorzeichenwechsel von $V_i$ begünstigt wird.

Für das weitere Vorgehen werden für die einzelnen Taktperioden jeweils vor Beginn der jeweiligen Taktperiode Ti die Werte $V_{i-1}^*$ und $S_{i-1}^*$ des Integrals $S^*(t)$ ermittelt. So wird beispielsweise im vorliegenden Fall der in der Taktperiode $p_2$ auftretende Mittelwert $V_2$ als arithmetisches Mittel zwischen dem Integralwert $S_1^*$ zum Zeitpunkt $t_{2,1}$ in der Taktperiode $p_2$ und dem Integralwert $S_2^*$ zum Zeitpunkt $t_{3,1}$ in der Mitte der Taktperiode $p_3$ ermittelt. Mittelwert $V_2$ tritt in der Mitte der Zeitpunkte $t_{2,1}$, $t_{3,1}$ auf. Der Mittelwert lässt sich beispielsweise auch durch $V_2 = S_1 + p_2 \cdot F_2/2$ bzw allgemein $V_i = S_{i-1} + p_i \cdot F_i/2$ darstellen.

Die im Folgenden dargestellte Regelvorschrift sieht vor, dass, soferne $V_{i-1}^* \neq 0$ ist, der Mischer 9 abhängig vom Verhalten der aus der Steuerspannung $u_s(t)$ abgetasteten Steuerwerte $u_{s,i-1}$, $u_{s,i}$, vom Vorzeichen der Integralwerte $V_{i-1}^*$ und $S_{i-1}^*$ und von der Polarität $p_i$ von Impuls $z_i^*$ entweder den Steuerwert $u_{s,i}^*$ oder $u_{s,i-1}^*$ an den Pulsweitenmodulator 8 ausgibt:

i = 0: $u_{s,0}^*$ , $F_0^*$ , $V_0^* = 0$

Start

i:=i+1

einlesen/laden/abtasten von $u_{s,i}$

wenn $V_{i-1}^*=0$

dann gehe zu Berechnung mit $u_{s,i}^* := u_{s,i}$

sonst wenn $sign(S_{i-1}) = p_i$,            //sign(0):=$p_i$

dann gehe zu Berechnung mit $u_{S,i}^* := 0$

sonst wenn

$[sign(V_{i-1}^*) = p_i$ und $[u_{s,i}>u_{s,i-1}^*]$

dann

dann gehe zu Berechnung mit $u_{s,i}^*: = u_{s,i-1}^*$


sonst

gehe zu Berechnung mit $u_{s,i}^* := u_{s,i}$


wobei für die Berechnung gilt:

$$F_i^* = u_{S,i}^* \cdot \left(1 - \frac{u_{S,i-1}^*}{2}\right)$$

$$S_i^* = S_{i-1}^* + p_i \cdot F_i^*$$

$$V_i^* = S_{i-1}^* + p_i \cdot \frac{F_i^*}{2}$$

$$\tau_i^* = \frac{u_{S,i-1}^* + u_{S,i}^*}{2}$$

In Taktperiode $p_i$ Ausgabe von dem Wert $\tau_i^*$ an PWM 8
gehe zu Start

**Diagramme 26-30** zeigen die Auswirkung dieser zusätzlichen Maßnahme.

Zu Beginn der Taktperiode $p_3$ liegen zum Zeitpunkt $t_{3,0}$ die neue Pulsdauer $\tau_3^*$ sowie die Integralwerte $V_2^* > 0$ und $S_2^*>0$ vor.
Obwohl die Verringerung des Steuerwerts bei einem negativen Impuls eine positive Verschiebung des Integrals begünstigt, wird der Abschaltzeitpunkt $t_{3,2}$ durch den neuen Steuerwert $u_{s,3}^* = u_{s,3}$ bestimmt, weil der neue Steuerwert $u_{s,3}$ kleiner ist, als der alte Steuerwert $u_{s,2}^*$ und die Absteuerungsbedingung B fehlt.
Mit $u_{s,3}^* = u_{s,3}$ werden die nächsten Integralwerte $V_3^*$, $S_3^*$ berechnet und an den Start gegangen. Es folgt die Erhöhung von i um 1 auf 4.

Zu Beginn der Taktperiode $p_4$ liegen zum Zeitpunkt $t4,o$ der neue Steuerwert $\tau_4^*$ sowie die Integralwerte $V_3^*$ > 0 und $S_3^*>0$ vor. Der Integralbeitrag $F_3^*$ zufolge des Impulses $z_3^*$ ist so klein ausgefallen, dass der Integralwert $S_3^*$

> 0 das gleiche Vorzeichen hat, wie $S_2$*.

Die Ablaufsteuerung stellt fest, dass der Fall sign($S_{i-1}$)=$p_i$ vorliegt, und geht mit $u_{s,4}$*=0 zur Berechnung. Die Pulsdauer von $z_4$* ergibt sich zu $u_{s,i-1}$*/2, der Integralbeitrag $F_4$* folglich zu Null, die Abschaltung von $z_4$* erfolgt bereits zum Zeitpunkt $t_{4,2}$*= $t_{4,1}$*.

Mit $u_{s,4}$* = 0 errechnen sich die nächsten Integralwerte zu $V_4$* = $S_4$* = $S_3$*. Wieder am Start erfolgt die Erhöhung von i um 1 auf 5.

Zu Beginn der Taktperiode $T_5$ liegen zum Einschaltzeitpunkt $t_{5,0}$ von $z_5$* dessen Dauer $\tau_5$*, sowie die Integralwerte $V_4$* > 0 und $S_4$* > 0 vor. Im aktuellen Zustand $p_5$ = -1 wird der erzeugte Impuls $z_5$* negativ gezählt. Jetzt ist sign($S_4$*)≠$p_5$, und es wird festgestellt, dass $u_{s,5}$ größer ist, als der alte Steuerwert $u_{s,4}$*=0. Über eine Vergrößerung des Steuerwertes entscheidet Bedingung A. Das Vorzeichen von $p_5$ und $V_4$ stimmen aber nicht überein, weshalb der Abschaltzeitpunkt $t_{5,2}$ durch den neuen Steuerwert $u_{s,5}$* = $u_{s,5}$ bestimmt wird. Die Aufsteuerung ist zulässig.

Analog kann mit dem Pulsweitenmodulator 8 mit dreieckförmiger Hilfsspannung $u_h$(t) vorgegangen werden, wobei die in **Fig.6** dargestellte Vorgehensweise die augenblickliche Pulsabschaltung bei Überlast oder Lastkurzschluss zwecks Strombegrenzung ermöglicht.

Bei der strichliert dargestellten Vorgehensweise in **Fig.6** wird im Rahmen der Erstellung der Impulse der pulsweitenmodulierten Primärwechselspannung $u_P$*(t), **Diagramm D13,** der Magnetisierungsstroms $i_m$*(t), **Diagramm D14,** ständig mitberechnet. Dabei kann anhand des vorgegebenen Sollwerts $u_{s,i}$* jeweils ein Beitrag $F_i$* zum Integralwert ermittelt werden, der der Fläche zwischen Nulllinie und der vom Magnetisierungsstrom $i_m$* vorgegebenen Geradenstücke entspricht. Da der Magnetisierungsstrom $i_m$*(t) in der Mitte der Taktperiode Ti stets den Wert Null aufweist, können die einzelnen Beiträge $F_i$* unmittelbar aus dem jeweiligen Sollwert $u_{s,i}$* für das betreffende Ausschaltfenster $AF_i$ abgeleitet werden. Die Beiträge $F_i$* werden dabei abwechselnd mit unterschiedlichem Vorzeichen versehen und zum Wert $V_i$ akkumuliert bzw aufaddiert, wie dies in **Diagramm D15** für die $V_i$* zufolge des modifizierten (strichliert dargestellt) pulsweitenmodulierten Signals z*(t) dargestellt ist.

Es wird der jeweilige Integralmittelwert $V_{i-1}$* berechnet und steht für die Ermittlung des modifizierten Steuerwertes $u_{s,i}$* im Ausschaltfenster $AF_i$ zur Verfügung bzw. wurde im Zeitraum $EF_{i-1}$ zwischen $t_{i,0}$ und $t_{i,2}$, der Mittelwert $V_{i-1}$* für den Zeitpunkt $t_{i,0}$ berechnet und steht in der Mitte der Taktperiode $T_i$ zum Zeitpunkt $t_{i,2}$ fest, wie mit der Steuerspannung $u_s$(t) im Zeitfenster $AF_i$ zu verfahren ist. In $EF_{i-1}$ von $z_i$ wird berechnet und entschieden, wie im AFi mit Steuerspannung $u_s$(t) zu verfahren ist und der Abschaltzeitpunkt $t_{i,3}$ bzw der aktuelle Steuerspannungswert $u_{s,i}$ von $z_i$ ermittelt wird.

Im Folgenden wird die zweite bevorzugte Vorgehensweise, wobei die Wirkung dieser Maßnahme wiederum ausgehend von dem in Fig. 6 dargestellten Problemfall in **Fig.6** bereits strichliert dargestellt ist, im Detail beschrieben.

Für das weitere Vorgehen wird für die einzelnen Taktperioden jeweils ein Mittelwert $V_{i-1}$* des Integrals S*(t) ermittelt, der zu Beginn der jeweiligen Taktperiode $T_i$ auftritt. So wird beispielsweise im vorliegenden Fall der zum Zeitpunkt $t_{3,0}$ zu Beginn der Taktperiode $p_3$ auftretende und vorliegende Mittelwert $V_2$ als arithmetisches Mittel zwischen dem Integralwert $S_1$ in der Mitte der Taktperiode $p_2$ und dem Integralwert $S_2$ in der Mitte der Taktperiode $p_3$ ermittelt. Der Mittelwert lässt sich beispielsweise auch durch $V_2 = S_1 + p_2 \cdot F_2/2$ bzw allgemein $V_i = S_{i-1} + p_i \cdot F_i/2$ darstellen.

Die im Folgenden dargestellte Regelvorschrift sieht vor, dass, soferne $V_{i-1} \neq 0$ ist, Mischer 9 abhängig von Zustand $p_i$ im Ausschaltfenster $AF_i$ des Impulses $z_i$* die Steuerspannung $u_s$(t) dergestalt modifiziert, dass in PWM 8 entweder nur eine Vergrößerung oder nur eine Verkleinerung des Steuerwertes $u_{s,i}$* erfolgen kann. Als Folge kann das zeitliche Integral S*(t) nicht über den Wert 0,5 anwachsen.

Es wird von einem stationären Zustand ausgegangen, um auch den Fall $V_{i-1}$=0 zu beschreiben.

i = 0: $u_{s,0}$, $S_0 = F_0/2$, $V_0 = 0$          stationärer Ausgangszustand

Start

i:=i+1, egal := falsch

wenn $V_{i-1}=0$

dann egal := wahr und gehe zu Warten

sonst wenn

$\text{sign}(V_{i-1}) = p_i$             //Bedingung A

dann $u_{s,i-1}{}^*$: $= u_{s,i,max}$ und gehe zu Warten      //in $AF_i$ $t_{i,2}$ bis $t_{i,3}$

sonst wenn

$\text{sign}(V_{i-1}) \neq p_i$             //Bedingung B

dann

$u_{s,i-1}{}^*$: $= u_{s,i,min}$ und gehe zu Warten      //in $AF_i$ $t_{i,2}$ bis $t_{i,3}$

sonst

egal := wahr und gehe zu Warten

Warten auf Pulsabschaltung von $z_i$ in $AF_i$ $t_{i,2}$ bis $t_{i,3}$:

wenn egal= wahr, dann Abschaltung bei

$u_s(t_{i,3}) = u_h(t_{i,3})$ und gehe zu Berechnung mit $u_{s,i}{}^* = u_h(t_{i,3})$

sonst wenn $u_{s,i-1}{}^* = u_{s,i,max}$, dann $\underline{u_s{}^*(t) = u_{s,i-1}{}^*}$, soferne $u_s(t)> u_{s,i-1}{}^*$ in $AF_i$ , und

Abschaltung, wenn $u_s(t_{i,3}) = u_h(t_{i,3})$       //$u_{s,i}{}^*= u_s(t_{i,3}) \leq u_{s,i-1}{}^*$

gehe zu Berechnung mit $u_{s,i}{}^* = u_h(t_{i,3})$

sonst wenn $u_{s,i-1}{}^* = u_{s,i,min}$, dann $\underline{u_s{}^*(t) = u_{s,i-1}{}^*}$, soferne $u_s(t)< u_{s,i-1}{}^*$ in $AF_i$ und

Abschaltung, wenn $u_s(t_{i,3}) = u_h(t_{i,3})$       //$u_{s,i}{}^*= u_s(t_{i,3}) \geq u_{s,i-1}{}^*$

gehe zu Berechnung mit $u_{s,i}{}^* = u_h(t_{i,3})$

wobei für Berechnung gilt:

$$F_i^* = u_{S,i}^* \cdot \left(1 - \frac{u_{S,i}^*}{2}\right)$$

$$V_i^* = S_{i-1}^* + p_i \cdot \frac{F_i^*}{2}$$

$$S_i^* = S_{i-1}^* + p_i \cdot F_i^*$$

gehe zu Start

Die Pulserzeugung wird nach Initialisierung mit den Startwerten gestartet, indem i um 1 auf 1 erhöht und die Hilfsvariable egal := falsch gesetzt wird. Da $V_0^*=0$ ist, wird egal:=wahr gesetzt, worauf unabhängig von $u_{s,0}^*$ die Ermittlung des neuen Steuerspannungswertes $u_{s,1}^*$ abgewartet wird. $S_1^*$ und $V_1^*$ werden berechnet, ein neuer Durchlauf beginnt mit Erhöhung von i um 1 auf 2 und Rücksetzung der Hilfsvariable egal:=falsch.

Da sich die Steuerspannung nicht geändert hat, wird $u_{s,1}^*=u_{s,0}^*$ festgestellt und es ergibt sich auch $V_1^*$ zu Null. Die Ablaufsteuerung springt zu Warten mit dem Wert egal:=wahr. Es wird auf den Abschaltzeitpunkt bei $u_s^*(t_{2,3}) = u_h(t_{2,3})$ gewartet. Mit dem wirksam gewordenen neuen Steuerwert $u_{S,2}^* = u_s^*(t_{2,3}) = u_h(t_{2,3})$ wird mit der Berechnung von $V_2^*$ und $S_2^*$ fortgefahren und wieder an den Start gegangen. Es folgt die Rücksetzung von egal auf egal:=falsch und die Erhöhung von i um 1 auf 3.

Die Einschaltung von $z_3$ erfolgt im $EF_2$ mit $u_{s,2}^*$. Zu Beginn der Taktperiode $T_3$ tritt der Integralmittelwert $S^*(t_{3,0})$ = $V_2^* > 0$ auf, welcher in Mischer 9 zum Zeitpunkt $t_{3,2}$ vorliegt. Im aktuellen Zustand $p_3 = -1$ wird der erzeugte Impuls $z_3^*$ negativ gezählt. Das Vorzeichen von $p_3$ und $V_2^*$ sind entgegengesetzt, weshalb die Ablaufsteuerung zu Bedingung B gelangt, und Bedingung B für den Abschaltzeitpunkt $t_{3,3}$ wirksam wird. Bei Bedingung B wird mit $u_{s,2}^* = u_{s,3,min}$ in den Wartezustand gegangen.

Im Fall $u_{s,2}^* = u_{s,3,min}$ wird im $AF_3$ die Steuerspannung us(t), soferne sie abnimmt, zur Steuerspannung $u_s^*(t)$ modifiziert, die nicht kleiner sein kann, als $u_{s,2}^*$. Die Abschaltung von $z_3^*$ erfolgt zum Zeitpunkt $t_{i,3}^*$ bei Gleichheit von $u_s(t_{i,3})$ mit $u_h(t_{i,3})$ und wird mit dem neuen Steuerwert $u_{s,3}^* = u_h(t_{i,3})$ zur Berechnung gegangen. Hat die Steuerspannung $u_s(t)$ jedoch abgenommen, wie es hier der Fall ist, so ergibt sich $u_{s,3}^* = u_{s,2}^*$.

Mit $u_{s,3}^* = u_{s,2}^*$ werden die nächsten Integralwerte $V_3$, $S_3$ berechnet und an den Start gegangen. Es folgt die in diesem Fall nicht erforderliche Rücksetzung von egal auf egal:=falsch und die Erhöhung von i um 1 auf 4.

Zu Beginn der Taktperiode $T_4$ tritt der Integralmittelwert $S^*(t_{4,0}) = V_3^* > 0$ auf, welcher zum Zeitpunkt $t_{4,2}$ vorliegt. Im aktuellen Zustand $p_4 = +1$ wird der erzeugte Impuls $z_4^*$ positiv gezählt. Das Vorzeichen von $p_4$ und $V_3^*$ sind ident, weshalb die Ablaufsteuerung schon von Bedingung A in den Wartezustand springt. Wenn Bedingung A für die Bestimmung des Abschaltzeitpunktes $t_{4,3}$ zur Anwendung kommt, wird mit $u_{s,3}^*= u_{s,4,max}$ in den Wartezustand gegangen.

Im Fall $u_{s,3}^* = u_{s,4,max}$ wird im $AF_4$ sicher gestellt, dass die Steuerspannung $u_s^*(t)$ nicht größer sein kann, als $u_{s,2}^*$. Die Abschaltung von $z_4^*$ erfolgt zum Zeitpunkt $t_{i,4}^*$ bei Gleichheit von $u_s(t_{i,4})$ mit $u_h(t_{i,4})$ und wird mit dem neuen Steuerwert $u_{s,4}^* = u_h(t_{i,4})$ zur Berechnung gegangen.

Mit $u_{s,4}^* = u_h(t_{4,3})$ werden die nächsten Integralwerte $V_4$, $S_4$ berechnet, und an den Start gegangen. Es folgt die Erhöhung von i um 1 auf 5.

Zu Beginn der Taktperiode $T_5$ tritt der Integralmittelwert $S^*(t_{5,0}) = V_4^* > 0$ auf, welcher zum Zeitpunkt $t_{5,2}$ vorliegt. Im aktuellen Zustand $p_5 = -1$ wird der erzeugte Impuls $z_5^*$ negativ gezählt. Das Vorzeichen von $p_5$ und $V_4^*$ sind entgegengesetzt, weshalb wiederum Bedingung B für die Bestimmung des Abschaltzeitpunktes $t_{5,3}$ zur Anwendung kommt. Wenn Bedingung B für die Bestimmung des Abschaltzeitpunktes $t_{5,3}$ zur Anwendung kommt, wird mit $u_{s,4}^*= u_{s,5,min}$ in den Wartezustand gegangen.

Im Fall $u_{s,4}^* = u_{s,5,min}$ wird im $AF_5$ sicher gestellt, dass die Steuerspannung $u_s^*(t)$ nicht kleiner sein kann, als $u_{s,4}^*$. Die Abschaltung von $z_5^*$ erfolgt zum Zeitpunkt $t_{i,5}^*$ bei Gleichheit von $u_s(t_{i,5})$ mit $u_h(t_{i,5})$ und wird mit dem neuen Steuerwert $u_{s,5}^* = u_h(t_{i,5})$ zur Berechnung gegangen. Hat die Steuerspannung $u_s(t)$ zugenommen, wie es hier der Fall ist, so ergibt sich mit $u_{s,5}^* = u_h(t_{i,5})$ ein neuer Steuerwert.

Mit $u_{s,5}^* = u_h(t_{5,3})$ werden die nächsten Integralwerte $V_5$, $S_5$ berechnet und an an den Start gegangen. Es folgt die Erhöhung von i um 1 auf 6.

Zu Beginn der Taktperiode $T_6$ tritt der Integralmittelwert $S^*(t_{6,0}) = V_5^* > 0$ auf, welcher zum Zeitpunkt $t_{6,2}$ vorliegt. Im aktuellen Zustand $p_6 = +1$ wird der erzeugte Impuls $z_6^*$ positiv gezählt. Das Vorzeichen von $p_6$ und $V_5$ sind ident, weshalb Bedingung A für die Bestimmung des Abschaltzeitpunktes $t_{6,3}$ zur Anwendung kommt. Wenn Bedingung A für die Bestimmung des Abschaltzeitpunktes $t_{6,3}$ zur Anwendung kommt, wird mit $u_{s,5}^*= u_{s,6,max}$ in den Wartezustand gegangen.

Im Fall $u_{s,5}^* = u_{s,6,max}$ wird im $AF_6$ sichergestellt, dass die Steuerspannung $u_s^*(t)$ nicht größer sein kann als

$u_{s,5}$*. Die Abschaltung von $z_6$* erfolgt zum Zeitpunkt $t_{i,6}$* bei Gleichheit von $u_s(t_{i,6})$ mit $u_h(t_{i,6})$ und wird mit dem neuen Steuerwert $u_{s,6}$* = $u_h(t_{i,6})$ zur Berechnung gegangen. Hat die Steuerspannung $u_s(t)$ jedoch zugenommen, was hier der Fall ist, so ergibt sich $u_{s,4}$* = $u_{s,3}$*.

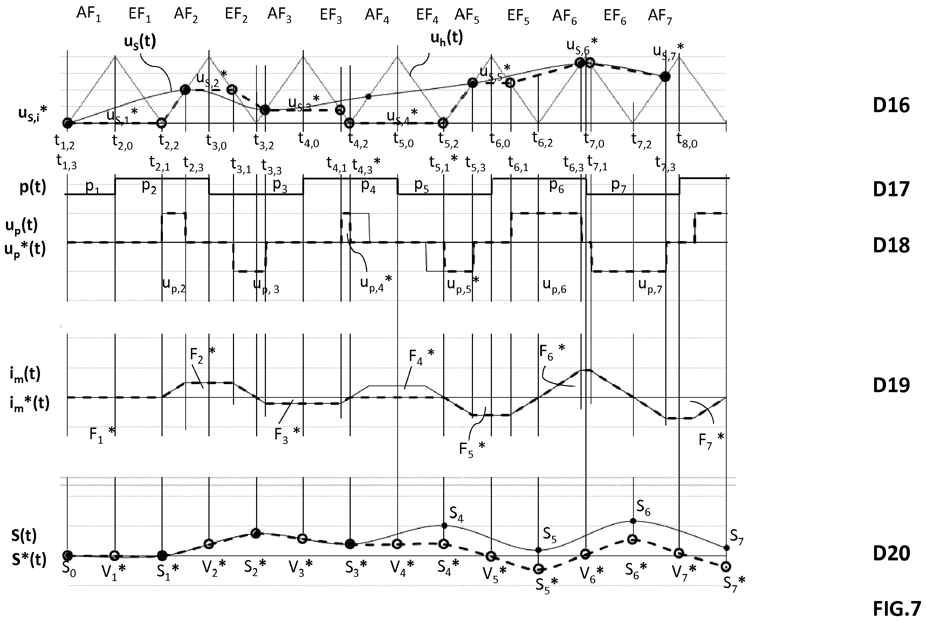

Die in **Fig.7** dargestellte Regelvorschrift gestattet die Absteuerung von $z_i$* unabhängig vom Zustand pi, wobei das zeitliche Integral S*(t) weiterhin im Bereich +-0,5 beschränkt bleibt.

Die Regelvorschrift für die Diagramme in **Fig.7** lautet:

i = 0: $S_0$* = $V_0$* = $u_{s,0}$* = 0                    Ausgangszustand 0

Start

i = i+1, egal = falsch

wenn $V_{i-1}$*=0

    dann egal = wahr und gehe zu Warten

sonst wenn $S_{i-1}$* = 0,

    dann gehe zu Bedingung A

sonst wenn sign($S_{i-1}$*) = $p_i$,

    dann $u_{s,i}$* := 0

sonst gehe zu Bedingung A

mit Bedingung A:

Wenn sign($V_{i-1}$*) = $p_i$

    dann $u_{s,i-1}$*: = $u_{s,i,max}$ und gehe zu Warten                    //im AFi [$t_{i,2}$ bis $t_{i+1,0}$]

sonst egal = wahr und gehe zu Warten

Warten:

wenn egal= wahr, dann warten auf

$u_s(t_{i,3})$ = $u_h(t_{i,3})$ und gehe zu Berechnung mit $u_{s,i}$* = $u_h(t_{i,3})$

sonst wenn $u_{s,i-1}$* = $u_{s,i,max}$, dann $u_s$*(t)= $u_{s,i-1}$*, soferne $u_s(t)$> $u_{s,i-1}$*, und warten auf

$u_s(t_{i,3})$ = $u_h(t_{i,3})$ und gehe zu Berechnung mit $u_{s,i}$* = $u_h(t_{i,3})$

Berechnung:

$$F_i^* = u_{S,i}^* \cdot \left(1 - \frac{u_{S,i}^*}{2}\right)$$

$$V_i^* = S_{i-1}^* + p_i \cdot \frac{F_i^*}{2}$$

$$S_i^* = S_{i-1}^* + p_i \cdot F_i^*$$

gehe zu Start

In **Fig.7** werden für die Bildung eines Sollwerts $u_{s,i}$ im Abschaltfenster $AF_i$ [$t_{i,2}$ $t_{i+1,0}$] zuvor im vorangegangenen Einschaltfenster $EF_{i-1}$ [$t_{i,0}$ $t_{i,2}$] der Mittelwert $V_{i-1}$ und Integralwert $S_{i-1}$ ermittelt und untersucht.

Die Pulserzeugung wird nach Initialisierung mit den Startwerten 0 gestartet, indem i um 1 auf 1 erhöht und die Hilfsvariable egal := falsch gesetzt wird. Da $V_0$=0 ist, wird die Hilfsvariable egal := wahr gesetzt und in den Wartezustand gesprungen. Weil zum Zeitpunkt $t_{1,2}$ Steuersignal $u_s$=0 ist, fällt $t_{i,3}$ mit $t_{i,2}$ zusammen und es wird kein Impuls $z_1^*$ gestartet, Signal $z^*(t)$ bleibt Null in $AF_1$.

Am Beginn der Taktperiode $T_2$, zum Zeitpunkt $t_{2,0}$, ändert das Taktsignal zum Zustand $p_2$=+1 (Diagramm 18). Nachdem in $AF_1$ ($t_{2,0}$ - $t_{1,2}$) während die Hilfsspannung $u_h(t)$ angestiegen ist, der alte Steuerwert $u_{s,1}^*$ mit Null festgestellt wurde, werden bis zum Zeitpunkt $t_{2,2}$, während die Hilfsspannung $u_h(t)$ abnimmt, die Werte $V_1^*$ und $S_1^*$ berechnet. $S_1^*$ und $V_1^*$ ergeben sich zu 0. Anschließend wird wieder an den Start gegangen. Ein neuer Durchlauf beginnt mit der Erhöhung von i um 1 auf 2 und Rücksetzung der Hilfsvariable egal:=falsch.

Die Ablaufsteuerung springt zu Warten mit dem Wert egal:=wahr, da $V_1^*$=0. Es wird gewartet, bis $u_s(t_{2,3})$ = $u_h(t_{2,3})$ eintritt. Mit dem wirksam gewordenen neuen Steuerwert $u_{S,2}^*$ = $u_s(t_{2,3})$ = $u_h(t_{2,3})$ wird mit der Berechnung von $V_2^*$ und $S_2^*$ fortgefahren und wieder an den Start gegangen. Es folgt die Rücksetzung von egal auf egal:=falsch und die Erhöhung von i um 1 auf 3.

Zu Beginn der Taktperiode $T_3$ werden die Werte $V_2^*$ und $S_2^*$ berechnet und liegen diese Werte in der Mitte der Taktperiode, Zeitpunkt $t_{3,2}$, vor. Im aktuellen Zustand $p_3$ = -1 wird der erzeugte Impuls $z_3^*$ negativ gezählt. Das Vorzeichen von $p_3$ und $V_2$ sind entgegengesetzt. Da $V_2^* \neq 0$ und $S_2^* \neq 0$ ist, wird als nächstes festgestellt, dass die Vorzeichen von $S_2^*$ und $p_3$ nicht übereinstimmen. Die Ablaufsteuerung gelangt zu Bedingung A. Weil Bedingung B fehlt, wird eine Verringerung des Steuerwerts immer zugelassen, weshalb egal:=wahr gesetzt und zu Warten gegangen wird. Es wird auf den Abschaltzeitpunkt $t_{3,3}$ von $z_3$ gewartet, bei dem $u_s(t)$=$u_h(t)$ auftritt, und wird mit diesem Wert $u_h(t_{3,3})$ zur Berechnung gegangen.

Die Berechnung der nächsten Integralwerte $V_3^*$, $S_3^*$ mit $u_{s,3}^*$ = $u_h(t_{3,3})$ erfolgt im Zeitfenster $EF_3$ von $p_4$, worin wieder an den Start gegangen wird. Es folgt die Erhöhung von i um 1 auf 4.

In der Mitte der Taktperiode $T_4$, Zeitpunkt $t_{4,2}$, liegen die Werte $S^*(t_{4,0})$ = $V_3^*$ > 0 und $S^*(t_{4,2})$ = $p_3 S_3^*$ > 0 vor. Der Magnetisierungsbeitrag $F_3^*$ zufolge von Impuls $z_3$ ist so klein ausgefallen, dass $S^*(t)$ das Vorzeichen nicht gewechselt hat. Impuls $z_4^*$ wird zum Zeitpunkt $t_{4,1}^*$ gestartet bzw. ändert zu diesem Zeitpunkt das pulsweitenmodulierte Signal $z^*$ seinen Zustand von 0 auf 1. Im vierten Durchlauf wird zum Zeitpunkt $t_{4,2}$ festgestellt, dass die Vorzeichen von $p_4$ und $S_4^*$ übereinstimmen. In diesem Fall wird von bislang durchgängigen Mischer 9 $u_{s,4}$ := 0 ausgegeben und der Impuls $z_4^*$ bereits zum Zeitpunkt $t_{4,2}$ abgeschaltet, bzw. ändert zu diesem Zeitpunkt das pulsweitenmodulierte Signal $z^*(t)$ seinen Zustand von 1 auf 0. $F_4^*$ ist damit 0, die Integralwerte $V_4^*$ und $S_4^*$ bleiben auf dem Wert von $S_3^*$.

Die Berechnung der nächsten Integralwerte $V_4^*$, $S_4^*$ mit $u_{s,4}^*$ = $u_h(t_{4,2})$ = 0 erfolgt im Zeitfenster $EF_3$ von $p_4$, worin wieder an den Start gegangen wird. Es folgt die Erhöhung von i um 1 auf 4. Zum Zeitpunkt $t_{5,0}$ beginnt der Zeitabschnitt $p_5$=-1 ($EF_4+AF_5$) für den fünften, negativen Impuls $z_5^*$. Impuls $z_5^*$ startet zum Zeitpunkt $t_{5,1}$ = $t_{5,2}$, weil $u_{s,4}$=0 und $u_s(t)$>0 ist, und $S_4^*$ wieder die richtige Polarität hat.

In der Mitte der Taktperiode $T_5$, Zeitpunkt $t_{5,2}$, liegen die Werte $S^*(t_{5,0})$ = $V_4^*$ > 0 und $S^*(t_{5,2})$ = $p_4 S_4^*$ > 0 vor. Im fünften Durchlauf wird bis zum Zeitpunkt $t_{5,2}$ entschieden, dass wegen des positiven Integralmittelwertes $V_4^*$ die Aufsteuerung bei einem negativen Impuls $z_5$ zulässig ist: Die Vorzeichen von $P_5$ und $S_4^*$ sind ungleich, ebenso jene von $P_5$ und $V_4^*$, wonach die Ablaufsteuerung mit egal:=wahr in den Wartezustand gelangt, bis zum Zeitpunkt $t_{5,3}$.

**Patentansprüche**

1. Verfahren zur Generierung abwechselnd positiver und negativer Spannungsimpulse einer Transformatorprimärspannung $u_P(t)$ aus einem von einer Steuerspannung us(t) und einer periodischen Hilfsspannung $u_h(t)$ mit Taktperiode $T_i$ abgeleiteten Impulszug z(t),

   wobei Impulse $z_i$ des Impulszuges z(t) zu abwechselnd positiven und negativen Spannungsimpulsen $u_{P,i}$ der Transformatorprimärspannung $u_P(t)$ verstärkt werden,

   wobei in jeder Taktperiode $T_i$ ein Impuls $z_i$ erzeugt wird, und wobei die Impulse $z_i$ des Impulszuges z(t) jeweils eine Dauer $\tau_i$ aufweisen und wobei die Dauer $\tau_i$ des jeweiligen Impulses $z_i$ einem Steuerwert $u_{s,i}$ entspricht oder dem Mittelwert eines alten und neuen Steuerwerts $(u_{s,i-1}+u_{s,i})/2$,

**dadurch gekennzeichnet, dass**

aus der Steuerspannung $u_s(t)$ die Steuerwerte $u_{s,i}$ abgetastet werden und die Steuerwerte $u_{s,i}$ rechnerisch zu den Werten $u_{s,i}^*$ abgewandelt werden, oder die Steuerspannung $u_s(t)$ zu der modifizierten Steuerspannung $u_s^*(t)$ verändert wird, und die Steuerspannungswerte $u_{s,i}^*$ aus der modifizierten Steuerspannung $u_s^*(t)$ abgetastet werden, und aus den aus der modifizierten Steuerspannung $u_s^*(t)$ abgetasteten oder den modifizierten Werten $u_{s,i}^*$ der pulsweitenmodulierte Impulszug $z^*(t)$ erstellt wird, wobei mit $u_{s,i}^*$ der Impuls $z_i^*$ des pulsweitenmodulierte Impulszug $z^*(t)$ erstellt wird, und in jeder Taktperiode pi der Magnetisierungsstrom $i_m^*(t)$, insbesondere die durch den pulsweitenmodulierten Impuls $z_i^*$ erzeugte Amplitude $m_i^*$ des Magnetisierungsstroms $i_m^*(t)$ berechnet wird, und das Integral $S^*(t)$, insbesondere der Wert $S_{i-1}^*$ zum Zeitpunkt des innerhalb von Impuls $z_i^*$ auftretenden Nulldurchgangs des Magnetisierungsstroms $i_m^*(t)$ berechnet wird, wobei das von der modifizierten Steuerspannung $u_s^*(t)$ oder dem modifizierten Wert $u_{s,i}^*$ erzeugte zeitliche Integral $S^*(t)$, insbesondere der Wert $S_i^*$ einen Wert $F_{max}$ nicht übersteigt, wobei gilt

$$F_{max} = u_{S,max} \cdot \left(1 - \frac{u_{S,max}}{2}\right).$$

**2.** Verfahren nach Anspruch 1, wobei der Steuerwert $u_{s,i}$ aus der Steuerspannung $u_s(t)$ abgetastet zu Beginn der Taktperiode pi vorliegt, und die Dauer $T_i^*$ von $z_i^*$ dem modifizierten Steuerwert $u_{s,i}^*$ entspricht, $T_i^* = u_{s,i}^*$, und der Integralabsolutwert $|S_i^*| = AS_i$ in Taktperiode $p_{i+1}$ vorgegeben wird mit

$$AS_i^* = \frac{u_{S,i}}{2} \cdot \left(1 - \frac{u_{S,i}}{2}\right),$$

und $u_{s,i}^*$ berechnet wird, nach:

$$u_{s,i}^* = (m_{i-1}^* + m_i^*)/2, \text{ mit } m_i^* = F_i^*/(1 - m_{i-1}^*/2), \text{ wobei } F_i^* := AS_{i-1}^* + AS_i^*.$$

**3.** Verfahren nach Anspruch 1, wobei der Steuerwert $u_{s,i}$ aus der Steuerspannung $u_s(t)$ abgetastet in der Mitte der Taktperiode pi vorliegt, und die Dauer $T_i^*$ von $z_i^*$ dem arithmetischen Mittelwert von altem und neuem modifizierten Steuerwert entspricht,

$$T_i^* = (u_{s,i-1}^* + u_{s,i}^*)/2,$$

und

der Integralabsolutwert $|S_i^*| = AS_i$ in Taktperiode $p_{i+1}$ vorgegeben wird mit

$$AS_i^* = \frac{u_{S,i}}{2} \cdot \left(1 - \frac{u_{S,i}}{2}\right),$$

und

$u_{s,i}^*$ berechnet wird, nach $u_{S,i}^* = 1 - \sqrt{1 - 2 \cdot F_i^*}$ , wobei $F_i^* := AS_{i-1}^* + AS_i^*$.

**4.** Verfahren nach Anspruch 1, wobei der Steuerwert $u_{s,i}$ aus der Steuerspannung $u_s(t)$ abgetastet zu Beginn oder während der Taktperiode pi vorliegt, und aus der periodischen Hilfsspannung ein Polaritätszustand pi abgeleitet wird, in der Impuls $z_i^*$ erzeugt wird, und die Dauer $T_i^*$ von $z_i^*$ dem arithmetischen Mittelwert von altem und neuem modifizierten Steuerwert,

$$T_i^* = (u_{s,i-1}^* + u_{s,i}^*)/2$$

entspricht, und der von dem pulsweitenmodulierten Impuls $z_i^*$ erzeugte Integralbeitrag $F_i^*$ bis zum jeweils nächsten Nulldurchgang von $i_m^*(t)$ in $p_{i+1}$,

$$F_i^* = u_{s,i}^*(1 - u_{s,i}^*/2) \text{ oder } F_i^* = u_{s,i}^*(1 - u_{s,i-1}^*/2)$$

mit der Pulspolarität pi gewichtet zum Integralwert

$$S_i^* = S_{i-1}^* + p_i F_i^*$$

und/oder

$$V_i^* = V_{i-1}^* + p_i F_i^*/2$$

addiert wird,
und

- entweder, bei Impulsen der Polarität $p_i = \text{sign}(V_{i-1}^*)$, wenn der Wert $u_{s,i}$ größer oder gleich ist, als der alte modifizierte Steuerwert $u_{s,i-1}^*$, oder bei Impulsen der Polarität pi = $-\text{sign}(V_{i-1}^*)$, wenn der Wert $u_{s,i}$ kleiner oder gleich ist, als der alte modifizierte Steuerwert $u_{s,i-1}^*$, anstelle des neuen Steuerwerts $u_{s,i}$ der alte Steuerwert $u_{s,i-1}^*$ genommen wird,
- oder im Falle von $\text{sign}(S_{i-1}^*) = p_i$, der modifizierte Steuerspannungswert $u_{s,i}^*$ zu $u_{s,i}^* = 0$ genommen wird und lediglich bei Impulsen der Polarität $p_i = \text{sign}(V_{i-1}^*)$ und wenn der Wert $u_{s,i}$ größer oder gleich ist, als der alte modifizierte Steuerwert $u_{s,i-1}^*$, anstelle des neuen Steuerwerts $u_{s,i}$ der alte Steuerwert $u_{s,i-1}^*$ genommen wird.

5. Verfahren nach Anspruch 1 oder 4, wobei bei Impulsen der Polarität pi = $\text{sign}(V_{i-1}^*)$ die Steuerspannung $u_s(t)$ in einem Zeitfenster AFi derart abgewandelt wird, dass $u_s^*(t) = u_{s,i-1}^*$, sobald $u_s(t) \geq u_{s,i-1}^*$ ist, bzw. eine Zunahme der abgewandelten Steuerspannung $u_s^*(t)$ unterbunden wird, und, bei Impulsen der Polarität pi = $-\text{sign}(V_{i-1}^*)$, die Steuerspannung $u_s(t)$ im Zeitfenster AFi derart abgewandelt wird, dass $u_s^*(t) = u_{s,i-1}$, sobald $u_s(t) \leq u_{s,i-1}^*$ ist, bzw. eine Abnahme der abgewandelten Steuerspannung $u_s^*(t)$ unterbunden wird;

6. Verfahren nach einem der Ansprüche 1, 4 oder 5, wobei im Falle von $\text{sign}(S_{i-1}^*) = p_i$ die Steuerspannung $u_s(t)$ im Zeitfenster AFi zu $u_s^*(t) = 0$ abgewandelt wird und bei Impulsen der Polarität $p_i = \text{sign}(V_{i-1})$, die Steuerspannung $u_s(t)$ im Zeitfenster AFi derart abgewandelt wird, dass $u_s^*(t) = u_{s,i-1}^*$, sobald $u_s(t) \geq u_{s,i-1}^*$ ist, bzw. $u_s^*(t)$ mit dem vorhergehend festgestellten Steuerwert $u_{s,i-1}^*$ begrenzt wird.

7. Modulator zum Durchführen eines Verfahrens nach einem der Ansprüche 1 bis 6.

8. Schaltregler zum Durchführen eines Verfahrens nach einem der Ansprüche 1 bis 6, wobei vorzugsweise der Schaltregler einen Modulator nach Anspruch 7 umfasst.

Fig. 1

EP 3 772 166 A1

Fig.2

23

FIG.3

FIG.3a

FIG.3b

FIG.4

Fig.5

FIG.6

FIG.7

Europäisches Patentamt
European Patent Office
Office européen des brevets

# EUROPÄISCHER RECHERCHENBERICHT

Nummer der Anmeldung

EP 19 18 9390

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | PANOV YURI ET AL: "Novel transformer-flux-balancing control of dual-active-bridge bidirectional converters", 2015 IEEE APPLIED POWER ELECTRONICS CONFERENCE AND EXPOSITION (APEC), IEEE, 15. März 2015 (2015-03-15), Seiten 42-49, XP032775201, DOI: 10.1109/APEC.2015.7104330 [gefunden am 2015-05-08] * Abbildungen 1-5 * * Kapitel I-III * ----- | 1-8 | INV. H02M1/40 ADD. H02M1/00 |
| A | US 4 780 804 A (GUSTAFSSON ALF G [SE]) 25. Oktober 1988 (1988-10-25) * das ganze Dokument * ----- | 1-8 | |
| A,D | WO 2012/130426 A2 (ERHARTT LUTZ [AT]) 4. Oktober 2012 (2012-10-04) * das ganze Dokument * ----- | 1-8 | |
| A | US 5 206 800 A (SMITH DAVID A [HK]) 27. April 1993 (1993-04-27) * das ganze Dokument * ----- | 1-8 | RECHERCHIERTE SACHGEBIETE (IPC) H02M |

Der vorliegende Recherchenbericht wurde für alle Patentansprüche erstellt

| Recherchenort | Abschlußdatum der Recherche | Prüfer |
|---|---|---|
| München | 30. Januar 2020 | Nguyen, Minh |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 19 18 9390

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

30-01-2020

| Im Recherchenbericht angeführtes Patentdokument | Datum der Veröffentlichung | Mitglied(er) der Patentfamilie | | Datum der Veröffentlichung |
|---|---|---|---|---|
| US 4780804 A | 25-10-1988 | AT | 56303 T | 15-09-1990 |
| | | AU | 586251 B2 | 06-07-1989 |
| | | CA | 1294328 C | 14-01-1992 |
| | | CN | 86103505 A | 26-11-1986 |
| | | DE | 3673906 D1 | 11-10-1990 |
| | | DK | 238386 A | 24-11-1986 |
| | | EP | 0209500 A1 | 21-01-1987 |
| | | FI | 862055 A | 24-11-1986 |
| | | JP | H0766297 B2 | 19-07-1995 |
| | | JP | S61272912 A | 03-12-1986 |
| | | NO | 167889 B | 09-09-1991 |
| | | NZ | 216043 A | 29-08-1989 |
| | | SE | 448038 B | 12-01-1987 |
| | | US | 4780804 A | 25-10-1988 |
| WO 2012130426 A2 | 04-10-2012 | AT | 511298 A1 | 15-10-2012 |
| | | WO | 2012130426 A2 | 04-10-2012 |
| US 5206800 A | 27-04-1993 | US | 5206800 A | 27-04-1993 |
| | | WO | 9324988 A1 | 09-12-1993 |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4150424 A
- GB 2071432 A
- US 4553198 A
- EP 0237861 A
- EP 0146876 A
- US 5550498 A
- DE 19624274

- DE 19634713 A
- EP 898360 B
- AT 511298 B
- US 6469491 B
- DE 19634713 A1
- EP 898360 B1
- AT 511298 B1